# FASCICULE DE BREVET EUROPEEN

(11) **EP 4 059 153 B1**
(45) Date de publication et mention de la délivrance du brevet: **23.09.2026**
(21) Numéro de dépôt: 20823890.7
(22) Date de dépôt: 13.11.2020
(51) Int. Cl.: H04B 7/06, H01Q 1/24, H01Q 3/28

(54) **PROCÉDÉ DE CONFIGURATION D'UN RÉSEAU D'ANTENNES ACTIVES ET RÉSEAU D'ANTENNES ACTIVES CONFIGURÉ SELON LEDIT PROCÉDÉ**
VERFAHREN ZUM KONFIGURIEREN EINES AKTIVEN ANTENNEN-NETZES UND NACH DEM VERFAHREN KONFIGURIERTES AKTIVES ANTENNEN-NETZ
METHOD FOR CONFIGURING AN ACTIVE ANTENNA NETWORK AND ACTIVE ANTENNA NETWORK CONFIGURED ACCORDING TO THE METHOD

(30) Priorité: 15.11.2019 FR 1912812
(43) Date de publication de la demande: 21.09.2022
(73) Titulaire: TDF, 92120 Montrouge (FR); Université de Rennes 1, 35065 Rennes Cedex (FR)
(72) Inventeur: FOFANA, Seydouba, 35000 RENNES (FR); PALUD, Sébastien, 35830 BETTON (FR); FUCHS, Benjamin, 35700 RENNES (FR); COLOMBEL, Franck, 35160 MONTFORT-SUR-MEU (FR); AVRILLON, Stéphane, 35700 RENNES (FR)
(74) Mandataire: Gevers & Orès
(86) Numéro de dépôt international: PCT/FR2020/052081
(87) Numéro de publication internationale: WO 2021/094696

(56) Documents cités:
- FUCHS BENJAMIN ET AL: "Array Pattern Synthesis With Excitation Control via Norm Minimization", IEEE TRANSACTIONS ON ANTENNAS AND PROPAGATION, IEEE SERVICE CENTER, PISCATAWAY, NJ, US, vol. 64, no. 10, 1 October 2016 (2016-10-01), pages 4228 - 4234, XP011624911, ISSN: 0018-926X, [retrieved on 20161004], DOI: 10.1109/TAP.2016.2594300

## Description

### Domaine technique de l'invention

L'invention se situe dans le domaine des réseaux d'antennes, en particulier des antennes actives reconfigurables et vise plus particulièrement la configuration de tels réseaux. L'invention trouve une application privilégiée pour optimiser la consommation énergétique des réseaux d'antennes en particulier destinés aux stations de base et des terminaux mobiles des réseaux mobiles.

### Arrière-plan technique

Les réseaux d'antennes actives sont utilisés dans les réseaux mobiles pour augmenter les performances des stations de base telles que la portée, le débit, la capacité de transmission, l'efficacité spectrale, *etc.*

Ces réseaux sont énergivores et leur combinaison à des techniques de formation de faisceaux et/ou de type MIMO (*Multiple Input Multiple Output)* accentue encore le phénomène d'augmentation de leur consommation énergétique, notamment par l'adjonction de puissances de traitement importantes, indispensables à ces nouvelles techniques.

Afin de réduire la facture énergétique associée à ces systèmes d'antennes actives, des techniques d'usage intelligent permettant de contrôler, maîtriser, améliorer ou optimiser leur efficacité ont vu le jour. Ces techniques traitent cependant partiellement le problème et les optimisations restent à ce jour faibles à modérées.

Par la suite, on désignera par « réseau d'antennes actives », tout réseau d'antennes comprenant une pluralité d'antennes et des moyens d'amplification dédiés à chaque antenne, tel qu'un amplificateur à faible bruit (LNA : *Low Noise Amplifier)* en réception et/ou un amplificateur de puissance (PA : *Power Amplifier*) en émission.

Chaque antenne active dudit réseau d'antennes peut comprendre un ou plusieurs éléments rayonnants connectés à un moyen d'amplification permettant notamment d'exciter le ou les éléments rayonnants selon une loi d'amplitude et de phase préétablie. De manière connue, la mise en réseau de telles antennes actives permet de générer un rayonnement selon un ou plusieurs faisceaux en excitant les éléments rayonnants selon un ou plusieurs jeux d'excitations complexes.

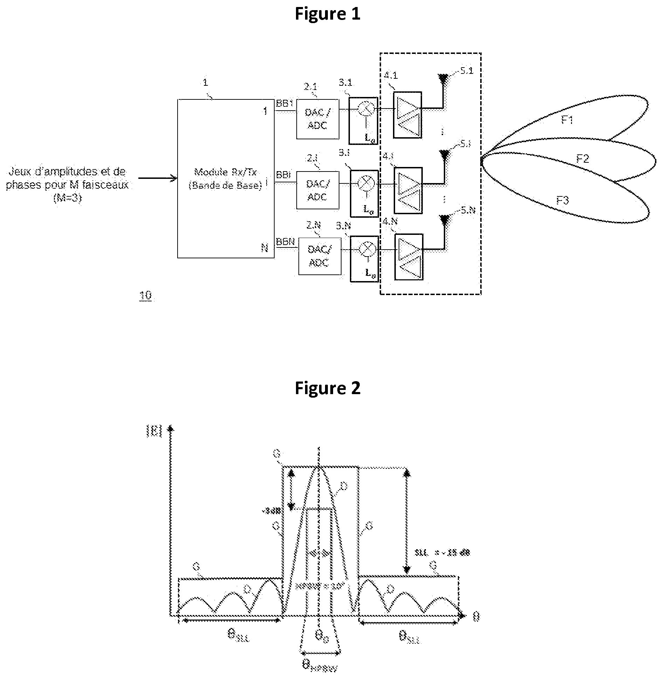

La **figure 1** illustre un exemple de réseau d'antennes actives 10 selon l'état de l'art, ce réseau pouvant être destiné à être implanté dans une station de base ou dans un terminal mobile d'un réseau radio-mobile, par exemple conformément à une norme 4G ou 5G.

Selon cet exemple, le réseau d'antennes actives est configuré pour émettre trois faisceaux distincts simultanés sur la voie descendante *(i.e.* de la station de base vers les terminaux mobiles). Ce réseau d'antennes actives peut s'appliquer également aux terminaux mobiles (i.e. du terminal mobile vers la station de base). Ce même réseau d'antennes actives pourra être configuré pour émettre tout autre nombre de faisceaux simultanés selon d'autres exemples particuliers.

Par la suite, on désignera par faisceaux simultanés, une pluralité de faisceaux formés simultanément par le réseau d'antennes actives en émission. Ainsi, le même réseau d'antennes peut être avantageusement utilisé par plusieurs opérateurs simultanément, en émission.

Le réseau d'antennes actives 10 comprend N éléments rayonnants 5.1, 5.i, 5.N, dont chacun est associé à un amplificateur de puissance 4.1, 4.i, 4.N respectif. Le réseau d'antennes comprend en outre un module en bande de base 1 destiné à piloter chacun des éléments rayonnants pour émettre des données sur les trois faisceaux simultanés, chacun des faisceaux pouvant être alloué à un opérateur de réseau mobile distinct.

A partir d'un jeu d'amplitudes et de phases fourni en entrée du module 1 pour chacun des faisceaux considérés, le module 1 est adapté à générer, sur N ports de sortie, une pluralité de signaux en bande de base BB1, BBi, BBN destinés respectivement aux antennes actives. Chaque signal en bande de base est ensuite converti en un signal analogique au moyen d'un convertisseur analogique numérique (ADC *: Analogue to Digital Converter* en anglais) avant d'être transposé sur un canal fréquentiel spécifique *(i.e.* sur une porteuse ou multi-porteuses radiofréquence) au moyen d'un mélangeur 3.1, 3.i, 3.N alimenté par un signal d'oscillateur local L₀. Après transposition, chacun des signaux est amplifié par un amplificateur respectif 4.1, 4.i, 4.N avant d'être émis par l'élément rayonnant associé 5.1, 5.i, 5.N.

Pour calculer les jeux d'amplitudes et de phases des N antennes, un algorithme mettant en œuvre une méthode d'optimisation convexe itérative a été proposée par B. Fuchs et S. Rondineau dans un article intitulé Array Pattern Synthesis With Excitation Control via Norm Minimization," et publié dans IEEE Transactions Antennas Propagation, pp. vol. 64, no. 10, Oct. 2016 référencé D1 ci-après. Les jeux d'amplitudes calculés selon cet algorithme permettent d'éteindre un certain nombre d'antennes actives. Autrement dit, les jeux d'amplitudes calculés sont tels que pour un certain nombre d'antennes actives, les amplitudes associées sont nulles. Toutefois, il a été constaté que les rendements énergétiques d'un réseau d'antennes configuré selon cet algorithme restent relativement faibles.

Ainsi, il existe un besoin d'améliorer l'efficacité énergétique de l'algorithme proposé dans D1 et plus généralement des réseaux d'antennes actives pour permettre de réaliser des économies d'énergie substantielles, notamment en vue d'un déploiement dans les stations de base et dans les terminaux mobiles des réseaux mobiles.

### Résumé de l'invention

L'invention vise à pallier au moins certains des inconvénients des réseaux d'antennes connus.

L'invention est définie par les revendications indépendantes. Des modes de réalisation sont décrits dans les revendications dépendantes.

En particulier, l'invention vise à fournir, dans au moins un mode de réalisation de l'invention, un procédé de configuration d'un réseau d'antennes actives adapté à émettre au moins un faisceau selon un diagramme de rayonnement souhaité et dans lequel chacune desdites antennes comprend au moins un élément rayonnant et un amplificateur adapté à exciter ledit élément rayonnant. Le procédé comprend en outre une étape de détermination d'antennes éteintes et non-éteintes, ladite étape de détermination comprenant une étape d'exploitation de caractéristiques des amplificateurs relatives à leurs consommations énergétiques de sorte que pour les antennes non éteintes, chacun des amplificateurs fonctionne dans un régime linéaire.

Par la suite, on dira qu'une antenne est non-éteinte si elle est émettrice ou prête à émettre un signal contenant des données à émettre selon le diagramme de rayonnement souhaité. Au contraire, une antenne éteinte désignera une antenne non émettrice ou non préparée pour émettre un tel signal, c'est-à-dire dont l'amplificateur n'est pas alimenté (*i.e.* pas de puissance d'alimentation ou de polarisation ni de puissance d'entrée).

Les caractéristiques des amplificateurs relatives à leurs consommations énergétiques sont des caractéristiques intrinsèques des amplificateurs (indépendantes de leur fonctionnement, par exemple telles qu'indiquées dans une fiche technique de l'amplificateur) destinés à être réellement utilisés dans le réseau d'antennes. Ainsi, l'étape de détermination d'antennes éteintes et non-éteintes tient compte des amplificateurs destinés à être réellement utilisés dans le réseau d'antennes.

Par exemple, les caractéristiques de consommation énergétique des amplificateurs comportent les points de compression à 1dB des amplificateurs destinés à être réellement utilisés dans le réseau d'antennes. Ces points de compression à 1dB sont par exemple utilisés comme seuils que les puissances de sortie respectives des amplificateurs ne doivent pas dépasser.. Ceci permet avantageusement de configurer le réseau d'antennes actives de manière à minimiser la consommation énergétique et/ou augmenter le rendement énergétique dudit réseau en évitant que les antennes, sélectionnées comme devant être actives pour que l'émission soit conforme au diagramme de rayonnement souhaité, ne fonctionnent dans un état de saturation, ce qui dégraderait le rendement énergétique.

L'exploitation de ces caractéristiques permet notamment de déterminer la tension de polarisation nécessaire pour fixer le point de fonctionnement de chaque amplificateur actif au plus proche du point de compression, de sorte que l'amplificateur fonctionne à un rendement énergétique optimal.

Selon une autre caractéristique de l'invention, l'étape d'exploitation utilise un jeu de conditions comprenant une condition de puissance portant sur la puissance en sortie de chaque amplificateur et utilisant les caractéristiques des amplificateurs.

La prise en compte de cette condition de puissance dans le jeu de conditions appliqué pour le calcul des excitations complexes permet avantageusement d'optimiser les ressources mises en œuvre pour ce calcul.

Par exemple, les caractéristiques des amplificateurs sont des puissances de compression, par exemple à -1 dB, des amplificateurs.

Selon une autre caractéristique de l'invention, la condition de puissance est que la puissance de sortie de chaque amplificateur doit rester inférieure ou égale à la puissance de compression.

Selon une autre caractéristique de l'invention, le jeu de conditions comprend en outre des conditions relatives à un gabarit élaboré selon le diagramme de rayonnement souhaité, ces conditions dites de rayonnement étant définies en fonction d'une puissance isotrope rayonnée équivalente déterminée à partir du diagramme de rayonnement souhaité.

La prise en compte de ces conditions de rayonnement fait en sorte que ledit au moins un faisceau émis par le réseau d'antennes actives permet avantageusement de réduire encore les ressources mises en œuvre pour le calcul des excitations complexes.

De manière avantageuse, la condition de puissance et les conditions relatives audit gabarit sont appliquées conjointement pour déterminer les antennes à éteindre.

Selon une autre caractéristique de l'invention, le jeu de conditions comprend en outre au moins une des conditions suivantes : une contrainte de couplage, selon laquelle chaque antenne dudit réseau d'antennes actives est couplée à au moins une antenne voisine ; une contrainte d'impédance, selon laquelle chaque antenne dudit réseau d'antennes actives est adaptée selon une impédance de référence.

Ainsi, un jeu d'excitations complexes peut être calculé en tenant compte des couplages réels entre les antennes du réseau d'antennes actives. La prise en compte de ces couplages est une contrainte supplémentaire permettant de corriger les valeurs de pondérations en amplitude et/ou en phase calculée selon l'invention pour atteindre des caractéristiques de rayonnement conforme au gabarit prédéfini. De manière avantageuse, cette contrainte supplémentaire empêche que les pondérations calculées selon l'algorithme divergent significativement des valeurs réelles, évitant ainsi d'obtenir un dépointage du réseau d'antennes erroné et/ou un niveau des lobes secondaires supérieurs au niveau attendu selon le gabarit. Par conséquent, l'application de cette contrainte supplémentaire garantit la robustesse du résultat final sur le plan du respect des contraintes de rayonnement.

La prise en compte d'une contrainte d'impédance est particulièrement avantageuse pour le calcul d'un jeu d'excitations complexes garantissant une adaptation d'impédance des antennes dudit réseau, de manière à assurer un niveau de pertes réduit. Par conséquent, la prise en compte de la condition d'adaptation d'impédance des antennes pour le calcul du jeu d'excitations complexes contribue avantageusement à réduire encore la consommation énergétique du réseau d'antennes actives.

Dans une moindre mesure, la prise en compte de la condition d'adaptation d'impédance dans le calcul du jeu d'excitations complexes permet aussi de réduire les sources potentielles d'intermodulation dues à des non-linéarités ainsi que les surtensions et surintensités sur les dispositifs pouvant entraîner des échauffements et une dégradation prématurée des équipements.

Selon une particularité de l'invention, la contrainte d'impédance est telle que les composantes d'un vecteur d'impédance active du réseau d'antenne actives sont inférieures ou égales à un seuil prédéterminé.

Selon une autre caractéristique de l'invention, l'étape de détermination comprend une sous-étape de calcul d'un jeu d'excitations complexes des antennes par exécution par un processeur d'un algorithme d'optimisation appliquant ledit jeu de conditions.

Selon une autre caractéristique de l'invention, le jeu d'excitations complexes est déterminé en appliquant à l'algorithme d'optimisation un diagramme de rayonnement environné (AEP) défini pour chaque antenne, ledit diagramme tenant compte d'un couplage entre ladite chaque antenne et un nombre prédéterminé d'antennes voisines de ladite chaque antenne.

Selon une autre caractéristique de l'invention, le jeu d'excitations complexes est obtenu par minimisation d'une norme convexe, notamment de type L₁, d'un vecteur de pondération représentatif desdites excitations complexes sous le jeu de conditions.

Selon une autre caractéristique de l'invention, dans le cas d'émission d'au moins deux faisceaux simultanés, le jeu d'excitations complexes est obtenu par une méthode de parcimonie groupée comprenant une minimisation d'une norme mixte, notamment de type L_{1,2}, d'un vecteur de pondération groupée dont chacune des composantes est la somme du carré des excitations complexes desdits au moins deux faisceaux pour chaque antenne dudit réseau d'antennes actives.

Selon une autre caractéristique de l'invention, le procédé comprend en outre une étape d'uniformisation des amplitudes du jeu d'excitations complexes de manière à fournir une loi de pondération en amplitude uniforme, ladite étape d'uniformisation comprenant un calcul de minimisation d'une norme infinie, notamment de type L_{∞}, d'un vecteur de pondération représentatif desdites excitations complexes.

Avantageusement, ce calcul de minimisation a pour effet de minimiser l'amplitude maximale des composantes du vecteur de pondération **x** tout en rendant équivalentes ses composantes non nulles *(i.e.* distribution uniforme des coefficients de pondération pour les antennes non éteintes). Ainsi, l'uniformisation permet d'utiliser les amplificateurs dans un régime où le rendement énergétique est élevé qui est fonction notamment de la tension de polarisation. La minimisation de la norme infinie L_{∞} du vecteur de pondération **x** permet avantageusement de réduire la dynamique de variation entre les amplitudes de pondération des différentes antennes, ce qui a pour effet de réduire le problème de désadaptation causé par un couplage entre les antennes.

Selon une autre caractéristique de l'invention, le jeu d'excitations complexes est calculé de manière itérative où ladite norme est pondérée, de sorte qu'un coefficient de pondération ${α}_{n}^{k}$ est affecté à chaque composante ${x}_{n}^{k}$ du vecteur de pondération.

Dans un mode particulier de réalisation, le jeu d'excitations complexes et plus particulièrement les pondérations en amplitude sont déterminées de manière itérative lors du calcul de minimisation de la norme convexe L₁ ou la norme mixte L_{1,2} du vecteur de pondération suivi de l'étape d'uniformisation des amplitudes.

De manière avantageuse, ce calcul itératif permet d'éteindre un nombre maximum d'antennes lors de l'optimisation de la norme du vecteur de pondération, lorsque la norme convexe L₁ ou la norme mixte L_{1,2} est appliquée.

Le calcul itératif a pour effet de pousser les composantes du vecteur de pondération autres que les composantes maximales à croître au cours des itérations successives jusqu'à une certaine valeur limite qui satisfait les contraintes de rayonnement et assure aux amplificateurs des antennes non éteintes de fonctionner dans un régime linéaire.

Selon une autre caractéristique de l'invention, le procédé comprend en outre une étape de commande d'alimentation des amplificateurs, lors de laquelle une puissance ou une tension de polarisation est appliquée à chaque amplificateur d'une antenne non éteinte, ladite puissance ou tension de polarisation étant déterminée en fonction d'une puissance de sortie de l'amplificateur correspondant à l'amplitude de l'excitation complexe déterminée lors de l'étape de détermination des antennes éteintes et non-éteintes. La puissance ou tension de polarisation est sélectionnée de manière à minimiser la puissance consommée par ledit amplificateur et maximiser le rendement dudit amplificateur.

Selon une autre caractéristique de l'invention, une valeur optimale de la tension de polarisation est sélectionnée pour tout ou partie des amplificateurs, de préférence parmi un ensemble de valeurs prédéfinies, de sorte que les valeurs optimales maximisent le rendement énergétique des amplificateurs et/ou minimisent la puissance consommée par les amplificateurs.

Plus particulièrement, la valeur optimale de la tension de polarisation est sélectionnée de sorte que chaque amplificateur dispose d'un point de fonctionnement proche du point de compression à 1dB.

Les valeurs optimales ainsi sélectionnées permettent de maximiser le rendement énergétique des amplificateurs et/ou minimisent la puissance consommée par les amplificateurs, tout en permettant à chaque amplificateur de fonctionner dans un régime linéaire.

Selon une autre caractéristique de l'invention, le procédé comprend une première étape préalable de caractérisation des amplificateurs, lors de laquelle chaque amplificateur est caractérisé par une fonction de puissance de polarisation dite puissance de consommation f_{Pdc} permettant de sélectionner une tension de polarisation V_{dc} de chaque amplificateur en fonction de ladite puissance en sortie Pₒᵤₜ dudit chaque amplificateur.

De manière avantageuse, cette fonction est pré-déterminée spécifiquement pour chaque amplificateur pour déterminer une valeur optimale de la tension de polarisation appliquée à chaque amplificateur des antennes non éteintes et ainsi optimiser la consommation énergétique du réseau d'antennes actives.

Selon une autre caractéristique de l'invention, le procédé comprend une deuxième étape préalable de caractérisation des amplificateurs, lors de laquelle chaque amplificateur est caractérisé par une fonction de puissance d'entrée f_{Pin} permettant de sélectionner une puissance d'entrée en fonction de la puissance en sortie de l'amplificateur.

De manière avantageuse, cette fonction est pré-déterminée spécifiquement pour chaque amplificateur pour déterminer une valeur optimale de la puissance d'entrée permettant d'évaluer le rendement énergétique du réseau d'antennes actives, pouvant servir notamment dans un mode de réalisation particulier de l'invention de sélectionner une tension de polarisation adaptée à optimiser ledit rendement énergétique.

Ainsi, ces deux fonctions peuvent être utilisées pour estimer la puissance consommée et le rendement énergétique du réseau d'antennes actives et en conséquence pour sélectionner une tension de polarisation optimale à chaque amplificateur. Autrement dit, la fonction f_{Pdc} de puissance de consommation et la fonction f_{Pin} de puissance d'entrée sont des caractéristiques intrinsèques de l'amplificateur relatives à sa consommation énergétique.

Selon une autre caractéristique de l'invention, la minimisation de la norme convexe L₁ ou de la norme mixte L_{1,2} est calculée par une méthode d'optimisation convexe.

L'utilisation d'une méthode d'optimisation convexe est particulièrement avantageuse pour maximiser le nombre d'antennes à éteindre et ainsi augmenter le rendement énergétique du réseau d'antennes actives.

L'invention vise aussi à fournir, dans au moins un mode de réalisation de l'invention, un réseau d'antennes actives parcimonieux adapté à émettre au moins un faisceau selon un diagramme de rayonnement souhaité, chacune desdites antennes actives comprenant au moins un élément rayonnant et un amplificateur adapté à exciter ledit élément rayonnant, ledit réseau étant configuré par le procédé de configuration selon l'invention tel que décrit ci-dessous.

Selon une particularité de l'invention, le réseau est au moins en partie linéaire, i.e. entièrement linéaire ou linéaire par sections. Alternativement, le réseau est un réseau conformé ou un réseau planaire.

L'invention vise aussi à fournir, dans au moins un mode de réalisation de l'invention, un dispositif de communication adapté à émettre selon au moins un faisceau d'ondes radiofréquences, ledit dispositif comprenant un réseau d'antennes actives tel que décrit ci-avant, ledit dispositif étant sélectionné parmi un terminal mobile ou une station de base.

En particulier, le dispositif est une station de base destinée à être implantée dans un réseau de communication radio-mobile utilisée en émission pour communiquer avec un terminal mobile.

En particulier, le dispositif est un terminal mobile destiné à être exploité dans un réseau de communication radio-mobile, tel qu'un téléphone portable de type « smart phone » utilisé en émission pour communiquer avec une station de base.

L'invention vise aussi un programme d'ordinateur comprenant des instructions adaptées à la mise en œuvre des étapes du procédé selon l'invention selon une ou plusieurs caractéristiques comme décrit ci-avant, lorsque ledit programme est exécuté sur un ordinateur.

L'invention vise également un moyen de stockage d'informations, amovible ou non, partiellement ou totalement lisible par un ordinateur ou un microprocesseur comportant des instructions de code d'un programme d'ordinateur pour l'exécution des étapes du procédé selon l'invention comme décrit ci-dessus.

### Brève description des figures

D'autres buts, caractéristiques et avantages de l'invention apparaîtront à la lecture de la description suivante donnée à titre uniquement non limitatif et qui se réfère aux figures annexées dans lesquelles :
[Fig. 1] La **figure 1** illustre l'architecture d'un système d'émission radiofréquence comprenant un réseau d'antennes actives selon l'art antérieur.
[Fig. 2] La **figure 2** représente un diagramme de rayonnement et un gabarit correspondant pour un faisceau donné.
[Fig. 3] La **figure 3** illustre schématiquement l'architecture d'un dispositif selon un mode de réalisation de l'invention.
[Fig. 4] La **figure 4** illustre un exemple de mise en œuvre de la commande de la tension de polarisation des amplificateurs du réseau d'antennes actives de la figure 3.
[Fig. 5] La **figure 5** représente sous forme d'un organigramme un mode de réalisation du procédé selon l'invention.
[Fig. 6] La **figure 6** illustre un exemple d'architecture d'un dispositif adapté à mettre en œuvre le procédé selon un mode de réalisation de l'invention.
[Fig. 7] La **figure 7** illustre un exemple de loi de pondération en amplitude et le diagramme de rayonnement du réseau d'antennes actives correspondant obtenus par le procédé selon l'invention par comparaison à l'art antérieur.
[Fig. 8] La **figure 8** illustre la puissance consommée des configurations présentées à la figure 7 pour différents dépointages.
[Fig. 9] La **figure 9** illustre un exemple de loi de pondération en amplitude et le diagramme de rayonnement du réseau d'antennes actives correspondant obtenus par le procédé selon l'invention avec et sans uniformisation des amplitudes.
[Fig. 10] La **figure 10** illustre la puissance consommée et le rendement énergétique des configurations présentées à la figure 9 pour différents dépointages.
[Fig. 11] La **figure 11** illustre le procédé de l'invention selon un mode de réalisation préféré.

### Description détaillée de l'invention

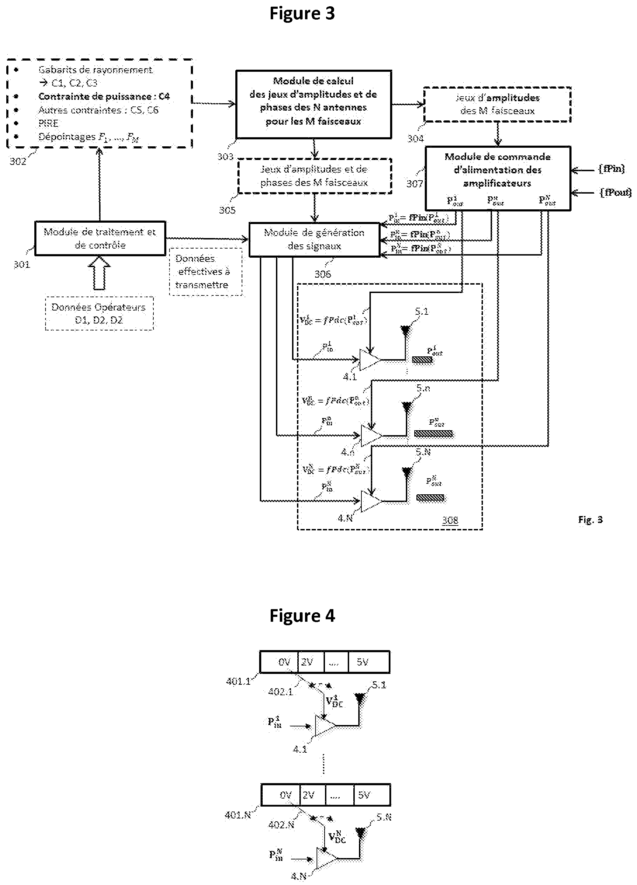

L'invention va maintenant être décrite en référence à la **figure 3** qui illustre partiellement l'architecture d'un dispositif d'émission comprenant un réseau d'antennes actives 308 et adapté à mettre en œuvre le procédé selon l'invention pour transmettre un ou plusieurs flux de données D1, D2, D3 au moyen d'un ou plusieurs faisceaux respectivement F1, F2, F3.

Ce dispositif peut être intégré ou associé à tout système de communication adapté à émettre. Par exemple, ce dispositif est destiné à être intégré dans tout dispositif de communication, tel qu'un terminal mobile ou une station de base destinée à être implantée dans un réseau radio-mobile.

Une telle station de base peut être configurée selon un mode mono-opérateur où le réseau d'antennes actives est utilisé par un seul opérateur d'un réseau mobile pour l'émission d'un seul faisceau ou bien selon un mode multi-opérateurs, lorsque l'infrastructure est partagée par plusieurs opérateurs de réseaux mobiles pour l'émission de plusieurs faisceaux simultanément.

Dans le cas mono-opérateur ou multi-opérateurs, chaque faisceau est émis selon un gabarit G prédéterminé en fonction d'un diagramme de rayonnement D souhaité. Le diagramme est généralement représenté par le module du champ électrique |E| du rayonnement émis par un réseau d'antennes actives, en fonction d'une direction considérée θ par rapport à la perpendiculaire à un plan comprenant les antennes du réseau d'antennes actives. De manière classique, le diagramme de rayonnement comprend un lobe principal et plusieurs lobes secondaires situés de part et d'autre du lobe principal.

La **figure 2** illustre un exemple de diagramme de rayonnement souhaité pour un faisceau d'émission donné. Le rayonnement peut être caractérisé par un ensemble de paramètres représentatifs du niveau d'émission du lobe principal et des lobes secondaires. Comme illustré, le diagramme de rayonnement peut être défini par trois paramètres θ₀, θ_{SLL} et θ_{HPBW} qui désignent respectivement la direction de rayonnement principale (i.e. direction suivant laquelle une quantité d'énergie maximale est rayonnée), l'ouverture couvrant les lobes secondaires et l'ouverture à mi-puissance communément désignée par bande passante à -3dB (θ_{HPBW} : *Half Power Bandwidth* en anglais).

A partir de ce diagramme de rayonnement souhaité D, un gabarit G de rayonnement est défini par tous ou partie de ces paramètres de rayonnement, tels que l'ouverture à mi-puissance et la puissance maximale des lobes secondaires (P_{SLL}) ou de manière équivalente le rapport entre la puissance maximale du lobe principal et la puissance maximale des lobes secondaires (e.g. *Side Lobe Level :* SLL =-15 dB). Le gabarit G définit un domaine {|E|, θ} à l'intérieur duquel tout rayonnement final (ou intermédiaire) généré ou destiné à être généré par le réseau d'antennes actives doit être compris. Comme illustré sur la figure 2, le diagramme de rayonnement D souhaité est compris à l'intérieur du gabarit G.

D'autres paramètres de rayonnement du réseau d'antennes actives peuvent être également déterminés à partir du diagramme de rayonnement souhaité D, tels que la direction principale de rayonnement θ₀ et la *Puissance Isotrope Rayonnée Equivalente* désignée PIRE ci-après.

Comme illustré sur la **figure 3****,** le dispositif 3 selon l'invention comprend un module de traitement et de contrôle 301 adapté à fournir les paramètres de rayonnement pour chacun des faisceaux concernés à partir de données fournies D1, D2, D3 par un ou plusieurs opérateurs mobiles. En particulier, ces données comprennent la direction de rayonnement des différents faisceaux et leurs gabarits associés ainsi que des flux de données à transmettre.

Selon une particularité de l'invention, le module de traitement et de contrôle 301 est adapté à déterminer un jeu de contraintes 302 comprenant des contraintes de rayonnement C1, C2, C3 déterminées à partir des gabarits respectifs G et une contrainte C4 relative à la consommation énergétique des amplificateurs associés à chaque antenne, de sorte que chaque amplificateur des antennes non éteintes fonctionne dans un régime linéaire.

Par définition, un amplificateur fonctionne dans un régime linéaire lorsque sa puissance de sortie croit linéairement en fonction de sa puissance d'entrée. De manière générale, ce régime s'applique tant que la puissance d'entrée est inférieure à la puissance du point de compression de l'amplificateur. Pour des puissances d'entrée supérieures à celle correspondant au point de compression, les amplificateurs sont sujets à des phénomènes de saturation de leur puissance de sortie. L'apparition de cette non-linéarité entraîne également des phénomènes d'intermodulation particulièrement problématiques pour les réseaux 4G et 5G.

Le dispositif selon l'invention comprend en outre un module de calcul 303 adapté à déterminer un jeu d'amplitudes et de phases pour l'ensemble des faisceaux destinés à alimenter les antennes du réseau d'antennes actives 308. Le module de calcul 303 est configuré pour fournir, sur une première sortie, le jeu d'amplitudes calculées 304 et sur une deuxième sortie, le jeu d'amplitudes et de phases calculées 305 par le module 303.

Le dispositif selon l'invention comprend en outre un module de commande 307 d'alimentation des amplificateurs du réseau d'antennes actives 308. Ce module de commande est adapté à déterminer pour chaque antenne, une tension de polarisation V_{DC} en fonction de la puissance de sortie Pₒᵤₜ définie par le jeu d'amplitudes 304 fournies par le module de calcul 303.

A cet effet, le module de commande 307 est adapté à stocker une fonction de polarisation permettant calculer une tension de polarisation en fonction de la puissance en sortie de l'amplificateur. Cette fonction f_{Pdc} est élaborée au préalable pour caractériser chaque amplificateur. Le module de commande 307 d'alimentation comprend en outre des moyens adaptés à déterminer la tension de polarisation de chaque amplificateur par application de l'algorithme selon l'invention en fonction de l'amplitude du jeu d'amplitudes (ou de manière équivalente à la puissance de sortie) destinée à être appliquée à l'antenne active correspondante.

Dès lors que la tension de polarisation a été déterminée pour chacune des antennes, le module de commande 307 est adapté à appliquer cette tension à chacun des amplificateurs concernés. A cet effet, le dispositif selon l'invention comprend, par exemple, une source d'alimentation 401 et un commutateur 402 piloté par le module de commande 307 pour sélectionner une tension de polarisation parmi un ensemble de tensions prédéfinies {0V, 2V, ..., 5V} comme illustré sur la **figure 4****.** La source d'alimentation 401 peut être commune à l'ensemble du réseau d'amplificateurs du réseau d'antennes actives 308.

Le dispositif selon l'invention comprend en outre un module de génération 306 de signaux destiné à créer un signal modulé portant les données effectives à transmettre. Ce module 306 est adapté notamment à associer à chaque jeu d'amplitudes et de phases 305 déterminé pour chacun des M faisceaux, un flux de données effectives à transmettre. Par exemple, ce module 306 comprend un sous-module numérique en bande de base *(baseband),* un modulateur IQ (*In phase-Quadrature)* et un sous-module de conversion analogique-numérique et numérique-analogique tel que décrit ci-avant en référence à la figure 1.

Ce module 306 est adapté à fournir, en entrée de chaque amplificateur, une puissance d'entrée Pᵢₙⁿ ajustée en fonction de l'amplitude de pondération, selon le jeu d'amplitudes et de phases 305.

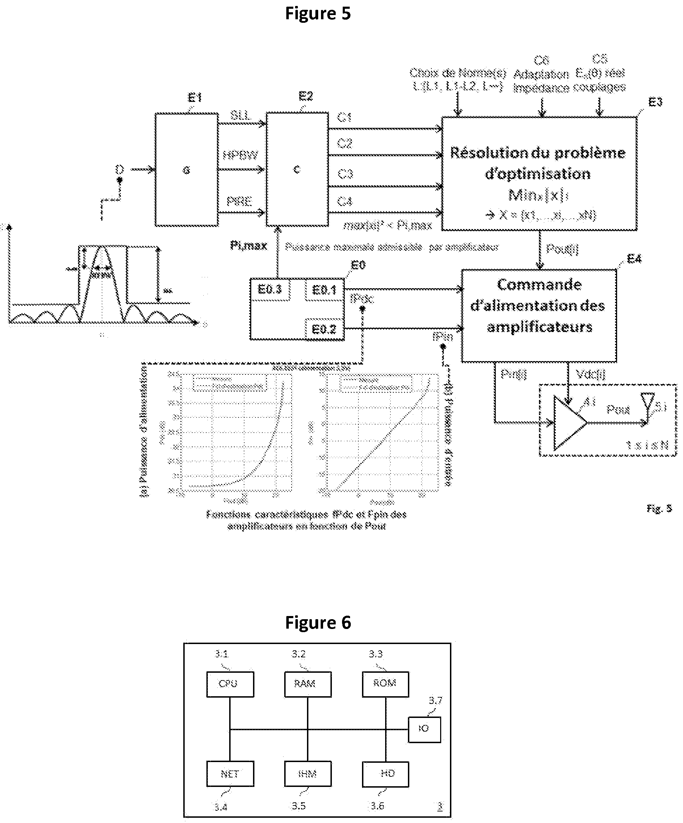

Une méthode mise en œuvre par le module de calcul des jeux d'amplitude et de phases 303 pour déterminer le jeu d'amplitudes destiné à déterminer les tensions de polarisation des amplificateurs sera décrite ci-après plus en détail pour deux modes de réalisation. Ce module de calcul est mis en œuvre par un dispositif à architecture d'ordinateur dont un exemple est décrit ci-dessous en référence à la **figure 6****.**

Ce dispositif 3 comporte un bus de communication connecté à une unité centrale de traitement 3.1, tel qu'un microprocesseur, notée CPU ; une mémoire à accès aléatoire 3.2, notée RAM, pour l'excécution d'un code du procédé selon l'invention ainsi que des registres adaptés à enregistrer des variables et des paramètres nécessaires pour la mise en œuvre du procédé selon des modes de réalisation de l'invention ; une mémoire morte 3.3, notée ROM, pour stocker des programmes informatiques pour la mise en œuvre des modes de réalisation de l'invention ; une interface réseau 3.4 connectée à un réseau de communication sur lequel des données numériques à traiter sont transmises ou reçues. L'interface réseau 3.4 peut être une seule interface réseau, ou composée d'un ensemble d'interfaces réseau différentes (par exemple filaire et sans fil, interfaces ou différents types d'interfaces filaires ou sans fil). Des paquets de données sont envoyés sur l'interface réseau pour la transmission ou sont lues à partir de l'interface réseau pour la réception sous le contrôle de l'application logiciel exécutée dans le processeur 3.1 ; une interface utilisateur 3.5 pour recevoir des entrées d'un utilisateur ou pour afficher des informations à un utilisateur ; un support de stockage optionnel 3.6 noté HD ; un module d'entrée/sortie 3.7 pour la réception ou l'envoi de données depuis ou vers des périphériques externes tels que disque dur, support de stockage amovible ou autres.

De manière alternative, le code exécutable est stocké sur le support de stockage 3.6 ou sur un support amovible numérique, tel qu'un disque par exemple. Selon une variante, le code exécutable des programmes peut être reçu au moyen d'un réseau de communication, via l'interface réseau 3.4, afin d'être stocké dans l'un des moyens de stockage du dispositif de communication 3, tel que le support de stockage 3.6, avant d'être exécuté.

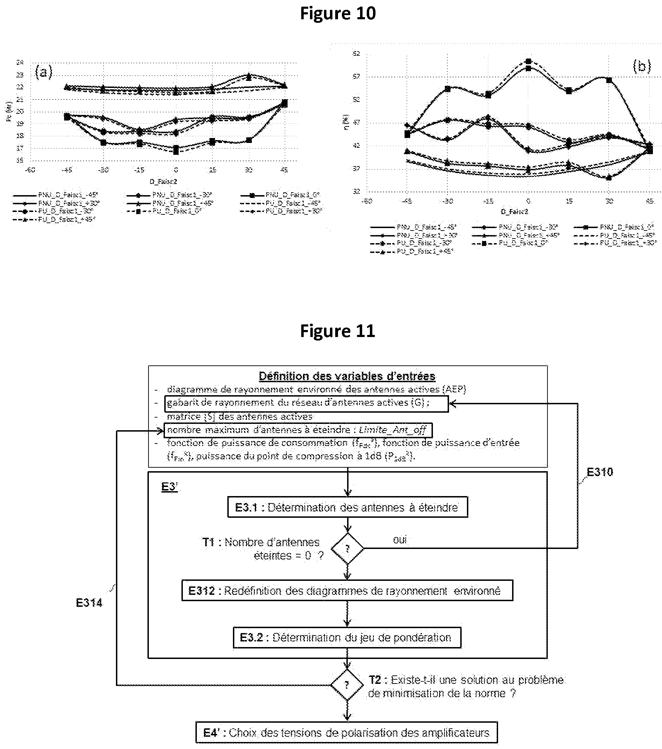

L'unité centrale de traitement 3.1 est adaptée pour commander et diriger l'exécution des instructions ou des portions de code logiciel du programme ou des programmes selon l'un des modes de réalisation de l'invention, instructions qui sont stockées dans l'un des moyens de stockage précités. Après la mise sous tension, le CPU 3.1 est capable d'exécuter des instructions stockées dans la mémoire RAM principale 3.2, relatives à une application logicielle, après que ces instructions aient été chargées de la ROM, par exemple. Un tel logiciel, lorsqu'il est exécuté par le processeur 3.1, provoque les étapes du procédé selon l'invention, par exemple telles que celles représentées sur la figure 5 ou la figure 11.

Dans ce mode de réalisation, l'appareil est un appareil programmable qui utilise un logiciel pour mettre en œuvre l'invention. Toutefois, à titre subsidiaire, la présente invention peut être mise en œuvre par voie matérielle, par exemple, sous la forme d'un circuit intégré spécifique ou ASIC.

### Premier mode de réalisation : cas mono-faisceau

L'invention va être maintenant décrite selon un premier mode de réalisation dans le cas « mono-faisceau », c'est-à-dire dans le cas où un seul faisceau est destiné à être rayonné par le réseau d'antennes actives pour l'émission ou la réception de données.

Pour transmettre des données dans un faisceau souhaité selon un diagramme de rayonnement compris dans le gabarit tel que défini ci-dessus, le module de calcul 303 détermine un jeu d'excitations complexes **x** adéquat, *i.e.* en amplitude et en phase, communément désigné par loi de pondération en amplitude et en phase.

Soit **x**={x₁,...,xᵢ,....x_{N}} un vecteur désignant l'ensemble des excitations complexes xᵢ des N antennes, tels que xᵢ=Aᵢ.e^{j.ϕi} pour tout entier naturel *i* variant de 1 à N (N étant un entier naturel désignant le nombre total d'antennes du réseau d'antennes), où Aᵢ et ϕᵢ désignent respectivement l'amplitude et la phase de l'excitation complexe xᵢ à appliquer à l'antenne *i*.

De manière générale, le module de calcul 303 détermine le jeu d'excitations complexes en minimisant la somme des composantes du vecteur **x** tout en respectant un jeu de conditions C_{θ}(x) et en exploitant des caractéristiques de consommation énergétique des amplificateurs, de sorte que pour les antennes non éteintes, chacun des amplificateurs fonctionne dans un régime linéaire. Les composantes du vecteur **x** dont l'amplitude Aᵢ est nulle correspondent à des antennes éteintes, les autres composantes étant destinées aux antennes allumées (i.e. pour lesquelles l'amplificateur est alimenté).

Le jeu de conditions C_{θ}(x) inclut des conditions de rayonnement qui sont définies à partir du gabarit de rayonnement, tel que décrit en référence à la figure 2.

Selon un mode de réalisation particulier, l'exploitation des caractéristiques de consommation énergétique des amplificateurs des antennes actives, de sorte que pour les antennes non éteintes, chacun des amplificateurs fonctionne dans un régime linéaire consiste à inclure dans le jeu de conditions C_{θ}(x) une condition de puissance C4 portant sur la puissance de sortie de chaque amplificateur des antennes pour faire en sorte que chaque amplificateur fonctionne dans un régime linéaire. L'ensemble de conditions C_{θ}(x) ainsi définie constitue des paramètres d'entrée de la méthode exécutée par le module de calcul 303 pour calculer le jeu d'amplitudes 304 également désigné jeu d'excitations complexes en amplitude.

A titre d'exemple illustratif, le jeu d'excitations complexes **x** est obtenu en résolvant le problème d'optimisation exprimé par **l'équation 1** ci-dessous : ${min}_{x} {\left‖x\right‖}_{1} sous {C}_{θ} \left(x\right) = \left\{\begin{matrix}C 4 : max {\left|{x}_{i}\right|}^{2} \leq {P}_{i , max} \\ C 1 : \left|{a}^{H}\left({θ}_{o}\right)x\right| \geq {E}_{inc} \\ C 2 : max \left(\left|{a}^{H}\left({Θ}_{HPBW}\right)x\right|\right) \leq \frac{{E}_{inc}}{\sqrt{2}} \\ C 3 : max \left(\left|{a}^{H}\left({Θ}_{SLL}\right)x\right|\right) \leq ρ ∗ {E}_{inc}\end{matrix}\right.$ avec les définitions suivantes :
*min* désigne la Fonction de minimisation ; *max* désigne la Fonction « maximum » ; ∥**x**∥₁désigne la norme convexe L₁ du vecteur de pondération **x** définie par ${\left‖x\right‖}_{1} = {\sum }_{i = 1}^{N} \left|{x}_{i}\right|$; |**x**| désigne le module du vecteur de pondération **x** ; P_{i,max} désigne la puissance maximale de sortie admissible par l'amplificateur associé à la i^{ème} antenne du réseau d'antennes ; **a** = [a₁(θ),...,a_{N}(θ)] est le vecteur directionnel dont chacune des composantes est définie par aₙ(θ) = |Eₙ(θ)| e^{i.k.d.*sin* θ} avec k = 2π/λ où Eₙ(θ) désigne le diagramme de rayonnement élémentaire réel de la *n^{ème}* antenne du réseau, λ désigne la longueur d'onde du rayonnement dans le vide et d désigne l'espacement entre deux antennes consécutives du réseau ; **a^{H}** désigne la transposée conjuguée du vecteur directionnel **a** ; θₒdésigne la direction de rayonnement principal ; Θ_{HPBW}désigne la plage angulaire associée à l'ouverture à mi-puissance ; Θ_{SLL}désigne la plage angulaire associée aux lobes secondaires ; ρ désigne le rapport entre l'amplitude du premier lobe secondaire et l'amplitude du lobe principal ; E_{inc}désigne le niveau maximal du champ électrique rayonné, tel que E_{inc}= (30×PIRE)^{0,5}/r, où r désigne la distance en espace libre et en champ lointain qui sépare le point où le champ est mesuré et l'antenne d'émission ; C_{θ}(x) désigne l'ensemble des contraintes du problème d'optimisation à résoudre de manière à déterminer la loi de pondération du réseau d'antennes.

Les amplitudes du jeu d'excitations complexes définissent plus particulièrement la distribution des amplitudes à appliquer aux éléments rayonnants des antennes du réseau, ces amplitudes étant également désignées par *coefficients de pondération en amplitude* du réseau d'antennes. Ce calcul d'optimisation consiste à déterminer les composantes du vecteur **x** qui minimise la norme L1 du vecteur **x** sous les conditions C1, C2, C3 et C4 désignées par C_{θ}(x).

Les trois contraintes d'optimisation C1, C2, C3 sont relatives au gabarit selon le diagramme de rayonnement souhaité et correspondent respectivement aux trois domaines identifiés en référence à la **figure 2** ci-dessus. La contrainte C1 vise à maximiser la puissance de rayonnement dans la direction principale de rayonnement θ₀. La contrainte C2 est relative à l'ouverture à mi-puissance. La contrainte C3 est relative au niveau des lobes secondaires.

Selon une particularité de l'invention, la contrainte d'optimisation C4 impose que chaque amplificateur fonctionne dans un régime linéaire, de manière à optimiser le rendement énergétique du réseau d'antennes actives tout en évitant de détériorer le signal à amplifier. La contrainte C4 permet de générer les coefficients de pondération en amplitude, tels que pour chaque amplificateur d'une antenne non éteinte, le module de l'excitation complexe xᵢ ne dépasse pas une valeur de seuil prédéterminée P_{i,max}.

De préférence, la valeur de P_{i,max} est inférieure ou égale à la puissance de compression du i^{ème} amplificateur. Plus particulièrement, P_{i,max} est fixée par le point de compression à -1 dB qui désigne le point de fonctionnement de l'amplificateur pour lequel le gain « faibles signaux » est diminué de 1 dB par rapport à celui d'un amplificateur idéal, i.e. parfaitement linéaire. En régime linéaire, la relation entre la puissance d'entrée et la puissance de sortie de l'amplificateur est la suivante : Pₒᵤₜ = G . Pᵢₙ, où G désigne le gain de l'amplificateur, ce gain étant qualifié de « faibles signaux ».

Dans le cas particulier où tous les amplificateurs sont strictement identiques, on pourra considérer que pour chaque amplificateur P_{i,max} = Pₘₐₓ, où Pₘₐₓ est une puissance inférieure ou égale à la puissance au point de compression. Pour éviter d'opérer dans un régime de saturation, on fixera Pₘₐₓ à un niveau inférieur à la puissance de compression à -1 dB.

Dans tous les cas, la prise en compte de cette contrainte de puissance C4 permet de garantir que pour toute solution **x** issue de la résolution du problème d'optimisation, les amplificateurs des antennes non éteintes fonctionnent dans un mode linéaire.

Ainsi, il est nécessaire d'indiquer au procédé les valeurs de puissance maximale P_{i,max} en fonction des amplificateurs destinés à être réellement utilisés dans le réseau d'antennes. L'étape de calcul E3 dépend ainsi des amplificateurs destinés à être réellement utilisés et change lorsqu'au moins un des amplificateurs du réseau est remplacé par un autre amplificateur différent (c'est-à-dire dans l'exemple décrit ayant un point de compression à -1 dB différent), car le seuil de comparaison pour ces amplificateurs est modifié. Ainsi, la solution **x** obtenue peut également changer.

Autrement dit, la résolution du problème d'optimisation défini par **l'équation 1** consiste à déterminer les excitations complexes du vecteur **x** permettant de maximiser l'amplitude du lobe principal |**a**^{H}(θₒ)**x**| dans la direction de rayonnement principale θ₀ tout en contraignant le diagramme de rayonnement généré à respecter le gabarit imposé. Cette résolution assure également que la puissance de sortie maximale admissible |xᵢ|² reste inférieure à un niveau de puissance caractéristique d'un régime de fonctionnement non linéaire des amplificateurs, tout en continuant à éteindre le plus grand nombre d'antennes possible.

Selon un exemple de réalisation particulier, l'algorithme utilisé pour calculer le jeu d'excitations **x** est une méthode d'optimisation convexe itérative, telle que celle décrite dans le document D1 référencé ci-avant. Dans ce cas, la contrainte d'optimisation exprimée par la condition C1 indiquée plus haut n'étant pas nécessairement convexe, celle-ci est définie cette fois par la contrainte *Re*(**a**^{H}(θₒ)**x**) ≥ E_{inc} où Re désigne la partie réelle. Il est important de remarquer que maximiser la partie réelle du champ revient à maximiser son amplitude car les excitations complexes xₙ sont optimisées à une phase globale près. La solution optimale obtenue x est alors nécessairement atteinte en *Im*(**a**^{H}(θₒ)**x***) = 0, où *Im* désigne la partie imaginaire et * désigne le conjugué. Cette observation est précisément ce qui permet la transformation du problème d'optimisation initial en un problème d'optimisation convexe.

L'utilisation d'une norme convexe, par exemple de type L₁ est particulièrement avantageuse dans la résolution de ce problème d'optimisation rendu convexe, dans la mesure où elle permet d'approcher la pseudo-norme L0 qui compte le nombre de composantes non nulles du vecteur **x.** L'utilisation d'une telle norme convexe est d'autant plus avantageuse qu'elle permet de rendre nulles certaines amplitudes du vecteur de pondération **x** en minimisant la somme des amplitudes de ce vecteur.

Selon une particularité de l'invention, le problème de minimisation de la norme L₁ tel que défini par l'équation 1 ci-dessus est résolu de manière itérative en introduisant des coefficients de pondération ${α}_{n}^{k}$ de manière à minimiser la norme L₁ pondérée du vecteur **x** telle que définie par l'**équation 2** suivante :
sous les conditions C(x) où ${α}_{n}^{k} = {\left(\left|{x}_{n}^{k - 1}\right|+ε\right)}^{- 1}$ avec ε>0.

### Deuxième mode de réalisation : cas général multi-faisceaux

L'invention peut également s'appliquer dans un cas « multi-faisceaux » dit « M-faisceaux » avec M désignant un entier naturel non nul supérieur ou égal à 2, c'est-à-dire dans le cas où au moins deux faisceaux simultanés sont destinés à être rayonnés par le réseau d'antennes actives, chaque faisceau étant émis sur un canal fréquentiel distinct.

En pratique, chaque canal fréquentiel peut être caractérisé par une fréquence porteuse ou plusieurs fréquences porteuses comme en cas d'utilisation d'une modulation multi-porteuses telle que l'OFDM (*Orthogonal Frequency Division Multiplexing*)*.*

Pour chaque faisceau Fₘ, où *m* désigne un entier naturel non nul supérieur ou égal à 2, on définit un canal fréquentiel fₘ, une direction de rayonnement θₘ et un jeu de conditions comprenant des contraintes de rayonnement C^{Fₘ}(**x**^{Fₘ}) et une condition C4 d'exploitation de caractéristiques de consommation énergétique des amplificateurs.

Selon une mode de réalisation particulier, la condition d'exploitation C4 comprend une contrainte de puissance liée à l'utilisation des amplificateurs, de sorte que chaque amplificateur des antennes non éteintes fonctionne dans un régime linéaire.

Pour chaque faisceau, les contraintes de rayonnement et la contrainte de puissance sont telles que celles décrites ci-avant, notamment en référence à la **figure 2****.**

Dans un mode de réalisation particulier, les contraintes de rayonnement C^{Fₘ}(**x**^{Fₘ}) des différents faisceaux Fₘ sont indépendantes dans le sens où chaque faisceau Fₘ a son propre gabarit G^{Fm}.

Pour pouvoir émettre à la fois plusieurs faisceaux F₁,...,F_{M} et éteindre les mêmes antennes pour l'ensemble de ces faisceaux, une dépendance est créée entre les vecteurs de pondération **x^{Fm}** associés à chaque faisceau Fₘ en introduisant une norme L₂ dans l'équation 1 décrite ci-dessus dans le cas mono-faisceau. L'introduction de cette norme L₂ revient à remplacer la norme L₁ par une norme mixte L1-L2 notée L_{1,2}, de manière à obtenir le problème d'optimisation formulé selon **l'équation 3** ci-dessous : ${min}_{x} {\left‖{αx}_{G}\right‖}_{1 , 2}^{k} sous C \left({x}^{{F}_{1}},…{x}^{{F}_{m}},…,{x}^{{F}_{M}}\right) = \left\{\begin{matrix}{C}^{{F}_{1}} \left({x}^{{F}_{1}}\right) ; \\ ⋮ \\ {C}^{{F}_{M}} \left({x}^{{F}_{M}}\right) ; \\ C 4\end{matrix}\right.$ où ${x}_{G} = \left[{x}_{1},…{x}_{N}\right] et {x}_{n} = \left[{{x}_{n}}^{F 1},…,{{x}_{n}}^{Fm},…,{{x}_{n}}^{FM}\right] avec {x}^{Fm} = \left[{{x}_{1}}^{Fm},…,{{x}_{n}}^{Fm}\right] ;$
**x_{G}** désigne le vecteur qui regroupe les pondérations des différents faisceaux par antenne ;
**α** est une matrice diagonale des coefficients ${α}_{n}^{k}$ ; et
${α}_{n}^{k}$ et k représentent les paramètres itératifs tels que définis dans l'équation 2.

Ainsi, la norme mixte L_{1,2} du vecteur de pondération **x** est définie par **l'équation 4** suivante: ${\left‖α.{x}_{G}\right‖}_{1 , 2}^{k} = {\sum }_{n = 1}^{N} {α}_{n}^{k} ⋅ {\left‖\overline{{x}_{n}}\right‖}_{2} = {\sum }_{n = 1}^{N} {α}_{n}^{k} \sqrt{{\sum }_{m = 1}^{M} {\left({x}_{n}^{{F}_{m}}\right)}^{2}} ;$ où ∥...∥_{1,2} désigne la norme mixte L₁,₂.

La contrainte C4 portant sur la puissance admissible associée à chaque amplificateur peut être définie par l'expression suivante **(équation 5) :**

Autrement dit, la loi de pondération en amplitudes permettant de générer les M faisceaux est obtenue en minimisant la norme mixte L₁,₂ du vecteur de pondération **x** sous les conditions C(**x**^{F₁}, ... ,**x**^{F_{M}}).

A chaque faisceau Fₘ est associé un vecteur de pondération **x**^{Fₘ}. A chaque antenne n est associé un vecteur de groupe **x**ₙ qui regroupe l'ensemble des pondérations ${x}_{n}^{{F}_{m}}$ attribuées à cette antenne, dues respectivement à chacun des faisceaux F₁,...,F_{M} où xₙ^{Fm} correspond à la pondération de l'antenne *n* pour le *m*^{ième} faisceau Fₘ avec 2≤m≤M.

De manière avantageuse, l'application de la norme L₂ sur le vecteur de groupe **x**ₙ (*i.e.* ∥*̅*̅x̅*̅*̅ₙ̅∥₂) permet de créer une interdépendance entre les différentes pondérations appliquées sur l'antenne *n* par les différents faisceaux considérés.

La minimisation de norme L₁ du vecteur **x_{G}** (*i*. *e*. ∥**x_{G}**∥₁) permet d'obtenir les mêmes antennes éteintes *(i.e.* mises à zéro des pondérations correspondantes) pour l'ensemble des faisceaux.

Selon une particularité de l'invention, les vecteurs de pondération sont calculés pour chaque faisceau en utilisant la norme infinie selon l'**équation 6** suivante : sous C^{Fₘ}(**x**^{Fₘ}) où ∥**x**^{Fₘ}∥_{∞} = *max*(|**x**^{Fₘ}|) désigne la norme infinie du vecteur de pondération **x**^{Fm} des antennes non éteintes pour le faisceau Fₘ, tel que ${x}^{{F}_{m}} = \left[{x}_{1}^{{F}_{m}},…,{x}_{N}^{{F}_{m}}\right]$.

Autrement dit, le problème d'optimisation consiste à minimiser la norme infinie du vecteur **x**^{Fm}. Cette minimisation permet avantageusement de contrôler les amplitudes d'excitation des antennes en les uniformisant du mieux possible, ce qui permet d'une part d'utiliser facilement l'ensemble des amplificateurs dans leur zone de rendement élevé *(i.e.* le plus près possible du point de compression sans le dépasser) et d'autre part de simplifier la polarisation des amplificateurs.

De manière avantageuse, une loi de pondération uniforme permet d'améliorer sensiblement l'efficacité énergétique du réseau d'amplificateurs. Elle présente également d'autres avantages, tels qu'une maximisation du gain du réseau d'antennes actives, une réduction des écarts d'amplitude entres les antennes voisines permettant de limiter le nombre de sources de tension d'alimentation pour le réseau d'amplificateurs et de réduire la complexité de l'étage d'amplification.

De manière générale, selon une particularité de l'invention, la norme mixte L_{1,2} est appliquée dès lors que l'on souhaite émettre plusieurs faisceaux et éteindre des antennes comme décrit ci-avant.

De manière générale, selon une particularité de l'invention, la norme infinie L_{∞} est appliquée pour réduire la dynamique de variation entre les amplitudes de la loi de pondération calculée selon l'un quelconque des modes ou variantes de réalisation décrits ci-avant ou envisageables dans le cadre de la présente invention.

Par exemple, dans le cas multi-faisceaux, selon un mode de réalisation particulier, le procédé selon l'invention comprend à l'issue du calcul du jeu de pondérations complexes par minimisation de la norme convexe mixte L₁,₂, une étape de calcul supplémentaire lors de laquelle une minimisation de la norme infinie du vecteur **x**^{Fm} est calculée.

Par exemple, dans le cas mono-faisceau, le procédé selon l'invention selon un mode de réalisation particulier comprend à l'issue du calcul du jeu de pondérations complexes par minimisation de la norme convexe L₁, une étape de calcul supplémentaire, lors de laquelle une minimisation de la norme infinie du vecteur **x_{G}** est calculée.

### Troisième mode de réalisation : cas bi-faisceaux

Pour illustrer l'invention de manière simplifiée dans le cas de l'émission de plusieurs faisceaux, on considère désormais le cas particulier où seulement deux faisceaux (M=2) sont émis dans des directions différentes θ₁, θ₂ et dans des canaux fréquentiels ou bandes de fréquences différents.

Par exemple, chaque faisceau est défini par un diagramme de rayonnement D et un gabarit G, tels que décrits ci-avant en référence sur la **figure 2****.**

Dans le présent mode de réalisation, on considère plus particulièrement le cas où deux opérateurs OP1 et OP2 émettent des faisceaux F1, F2 sur des canaux fréquentiels distincts f₁, f₂ respectivement.

Pour simplifier, on suppose que le gabarit de rayonnement G est le même pour les deux faisceaux F1 et F2. Toutefois, la description qui suit pourra évidemment s'adapter au cas où chaque faisceau dispose d'un gabarit qui lui est propre.

A chacun des deux faisceaux F1 et F2 est associé un vecteur de pondération **x**^{F1}, **x**^{F2}, tels que x^{F1}=[x₁^{F1}, ..., xᵢ^{F1}, x_{N}^{F1}] et x^{F2}=[x₁^{F2}, ..., xᵢ^{F2}, x_{N}^{F2}] où xᵢ^{F1} et xᵢ^{F2} désignent respectivement la pondération affectée à la *i^{ème}* antenne, pour tout entier *i* variant de 1 à N avec N désignant le nombre maximum d'antennes.

Selon un mode particulier de réalisation de l'invention, le problème d'optimisation à résoudre pour déterminer les vecteurs de pondération **x**^{F1}, **x**^{F2} peut être défini par l'**équation 7 :** ${min}_{{\overline{{X}_{n}}}^{k}} {\sum }_{n = 1}^{N} {α}_{n}^{k} {{\left‖\overline{{x}_{n}}\right‖}_{2}}^{k} sous \left\{\begin{matrix}C \left({x}^{F 1}\right) \\ C \left({x}^{F 2}\right)\end{matrix}\right.$ où
C(**x**^{F1}) désigne les contraintes de rayonnement de l'opérateur OP1 (gabarit G) et contrainte de puissance des amplificateurs ; C(**x**^{F2}) désigne les contraintes de rayonnement de l'opérateur OP2 (gabarit G) et de puissance ; $\overline{{x}_{n}} = \left[{x}_{n}^{F 1}, {x}_{n}^{F 2}\right]$ définit le groupe de pondération de l'antenne n, où les composantes du vecteur appartiennent respectivement au vecteur de pondération de l'opérateur OP1 et OP2 ; ∥**x̅ₙ̅**∥₂ désigne la norme L₂ de **x̅ₙ̅** définie par l'**équation 8** suivante :${\left‖\overline{{X}_{n}}\right‖}_{2} = \sqrt{{\sum }_{OP = OP 1}^{OP 2} {\left|{x}_{n}^{OP}\right|}^{2}}$ où OP est un indice désignant les opérateurs mobiles.

Ce problème d'optimisation consiste à minimiser la norme L₂ du vecteur de pondération de groupe en appliquant les jeux de conditions relatives à chaque faisceau.

La norme L₂ du vecteur **x̅ₙ̅** telle que définie ci-dessus permet avantageusement d'établir une dépendance entre les pondérations des différents opérateurs.

La valeur obtenue par le calcul de cette norme ∥**x̅ₙ̅**∥₂ représente le groupe de pondération de la *n^{ième}* antenne. Lorsque cette valeur est nulle, l'antenne correspondante est éteinte.

Pour obtenir l'équation 7 ci-avant, on définit un vecteur **x_{G}** qui regroupe les pondérations des deux opérateurs par antenne, tel que **x**_{G} = [∥x̅₁̅∥₂, ... , ∥x̅_̅{̅N̅}̅∥₂]. Pour mettre à zéro les pondérations en amplitude d'un certain nombre d'antennes *(i.e* éteindre ces antennes), le problème d'optimisation revient à minimiser la norme L₁ du vecteur **x**_{G}, telle que définie par **l'équation 9** suivante :${\left‖{x}_{G}\right‖}_{1} = {\sum }_{n = 1}^{N} {\left‖\overline{{x}_{n}}\right‖}_{2} .$

La minimisation de la norme L₁ du vecteur **x_{G}** fournit une solution parcimonieuse c'est-à-dire un vecteur **x_{G}** comprenant des composantes nulles. Les composantes nulles ∥x̅ₙ̅∥₂ correspondent aux groupes de pondérations nulles, *i.e.* aux antennes à éteindre. Cette méthode de parcimonie groupée faisant appel aux normes L₁ et L₂ revient donc à minimiser la norme mixte L1-L2 notée L_{1,2}.

Pour forcer le maximum de coefficients de pondération à zéro et ainsi éteindre le maximum d'antennes actives, une caractéristique de l'invention consiste à résoudre le problème d'optimisation par une méthode itérative, telle que celle décrite en référence à l'équation 2 en pondérant la norme mixte ci-dessus par l'introduction de coefficients ${α}_{n}^{k}$ dans l'équation 7.

Un exemple de réalisation du procédé selon l'invention va être maintenant décrit en référence à la **figure 5****.**

Lors d'une première étape de caractérisation préalable **E0.1,** chaque amplificateur du réseau d'antennes actives est caractérisé par une fonction de puissance de consommation f_{Pdc} permettant de calculer une puissance de polarisation P_{dc} désignée puissance d'alimentation sur la figure 5 (ou de manière équivalente une tension de polarisation correspondante V_{dc}) en fonction de la puissance en sortie de l'amplificateur Pₒᵤₜ. Cette fonction de puissance de polarisation est définie mathématiquement par une fonction f_{Pdc} représentant la relation entre la puissance de consommation P_{dc} et la puissance de sortie de l'amplificateur Pₒᵤₜ. La fonction f_{Pdc} permet de calculer la puissance P_{dc} appliquée à l'amplificateur pour le polariser. Ainsi, la puissance P_{dc} est une puissance d'alimentation qui constitue un paramètre de consommation électrique de l'amplificateur associé à chaque antenne non éteinte du réseau d'antennes actives. La fonction f_{Pdc} peut être définie spécifiquement pour chacun des amplificateurs, si bien qu'il est possible de calculer avec une grande précision la puissance totale consommée par le réseau d'amplificateurs.

Lors d'une deuxième étape de caractérisation préalable **E0.2,** chaque amplificateur du réseau d'antennes actives est caractérisé par une fonction de puissance d'entrée f_{Pin} permettant de déterminer une puissance d'entrée Pᵢₙ (ou de manière équivalente une tension d'entrée) selon la puissance en sortie Pₒᵤₜ de l'amplificateur. Cette fonction de puissance d'entrée est définie mathématiquement par une fonction f_{Pin} représentant la relation entre la puissance d'entrée Pᵢₙ et la puissance de sortie de l'amplificateur Pₒᵤₜ. La fonction f_{Pin} permet de calculer la puissance d'entrée Pᵢₙ nécessaire pour déterminer le rendement de l'amplificateur associé à chaque antenne non éteinte du réseau d'antennes actives pour une puissance de sortie donnée. La fonction f_{Pin} peut être définie spécifiquement pour chacun des amplificateurs, si bien qu'il est possible de calculer avec précision le rendement électrique du réseau d'amplificateurs.

Les fonctions f_{Pdc}(Pₒᵤₜ)=P_{dc} et f_{Pin}(Pₒᵤₜ)=Pᵢₙ, telles que définies ci-dessus, peuvent être représentées par des polynômes obtenus, par exemple au moyen de la méthode de *Spline* cubique permettant de définir par morceaux une fonction inconnue par des polynômes d'ordre 3, à partir d'échantillons de mesures. Dans le cadre de la présente invention, ces échantillons sont constitués en mesurant, pour chaque amplificateur, la puissance de sortie Pₒᵤₜ pour un ensemble de valeurs de puissance d'entrée Pᵢₙ et un ensemble de valeurs de puissance d'alimentation P_{dc} consommée par l'amplificateur.

Un exemple de détermination de ces deux fonctions est illustré sur la **figure 5** pour l'amplificateur référencé ADL5231, où chacune de ces deux fonctions est tracée à partir d'un ensemble d'échantillons de mesure respectif. Ces fonctions ne sont valables que pour l'intervalle de puissances dans lequel les mesures ont été faites.

Les fonctions f_{Pdc} et f_{Pin} peuvent être définies pour chacun des amplificateurs et par conséquent ne sont pas forcément identiques pour tous les amplificateurs. Une caractérisation individuelle des amplificateurs permet avantageusement d'obtenir des fonctions définies spécifiquement pour chaque amplificateur, de manière à déterminer les puissances d'alimentation P_{dc} et d'entrée Pᵢₙ avec une plus grande précision et ainsi d'optimiser encore la consommation électrique du réseau d'amplificateurs.

Lors d'une troisième étape de caractérisation préalable **E0.3,** chaque amplificateur du réseau d'antennes actives est caractérisé en outre par sa puissance maximale admissible P_{i,max} pour assurer un fonctionnement de l'amplificateur dans un régime linéaire, cette puissance étant déterminée en fonction du point de compression, comme décrit précédemment. Pour une meilleure précision, cette puissance est déterminée spécifiquement pour chaque amplificateur.

Les première, deuxième et troisième étapes de caractérisation préalable E0.1, E0.2, E0.3 peuvent faire partie d'une même étape de caractérisation préalable E0 plus générale du réseau d'antennes actives pouvant inclure d'autres opérations de caractérisation de ce réseau.

Lors d'une étape **E1,** le gabarit G est déterminé pour chaque faisceau, à partir des données D de rayonnement fournies par l'opérateur en déterminant les paramètres de rayonnement, tels que, par exemple, le niveau d'amplitude maximale des lobes secondaires, l'ouverture à mi-puissance, la puissance isotrope rayonnée équivalente comme décrit ci-avant.

Lors d'une étape **E2,** le jeu de conditions C est déterminé, d'une part à partir du gabarit G déterminé lors de l'étape E1 pour l'obtention des conditions de rayonnement C1, C2, C3 et d'autre part à partir des données de caractérisation des amplificateurs, telle que la puissance maximale admissible de chaque amplificateur 4.i pour assurer un fonctionnement en régime linéaire (e.g. P_{i,max}) pour l'obtention d'une condition de puissance relative à chaque amplificateur C4.

Lors d'une étape d'optimisation **E3,** les coefficients de pondération en amplitude sont calculés par un algorithme mettant en œuvre une méthode d'optimisation selon l'invention, par exemple une méthode d'optimisation convexe et itérative, cette méthode consistant à minimiser au moins une norme du vecteur **x,** ladite au moins une norme étant sélectionnée parmi un ensemble de normes prédéfini (L₁, L₁-L₂, L_{∞}).

Plus précisément, cette étape d'optimisation E3 peut inclure une ou plusieurs, en particulier deux, étapes de calcul de minimisation d'une norme du vecteur de pondération **x** ou **x**^{Fm}, chaque norme étant sélectionnée parmi ledit ensemble de normes prédéfini ci-dessus.

Dans le cas mono-faisceau, selon un mode particulier de réalisation de l'invention, l'étape d'optimisation E3 comprend une première étape de calcul de minimisation de la norme L₁. Le procédé selon l'invention peut comprendre, à l'issue de la première étape de calcul, une deuxième étape de calcul de minimisation de la norme infinie L_{∞} pour uniformiser les amplitudes de la loi de pondération issue de la première étape de calcul. Dans ce cas, les normes L₁ et L_{∞} sont préalablement sélectionnées.

Dans le cas multi-faisceaux, selon un mode particulier de réalisation de l'invention, l'étape d'optimisation E3 comprend une première étape de calcul de minimisation de la norme mixte L₁-L₂. Le procédé selon l'invention peut comprendre, à l'issue de la première étape de calcul, une deuxième étape de calcul de minimisation de la norme infinie L_{∞} pour uniformiser les amplitudes de la loi de pondération issue de la première étape de calcul. Dans ce cas, les normes L_{1,2} et L_{∞} sont préalablement sélectionnées.

Le choix d'une ou plusieurs de ces normes, *i.e.* {L₁} ou {L₁ et L_{∞}} ou {L_{1 ,2}} ou {L_{1,2} et L_{∞}} constitue un paramètre d'entrée de l'algorithme mis en œuvre pour le calcul des coefficients de pondération en amplitude. Lors de cette étape de calcul E3, la puissance de sortie de chaque amplificateur Pₒᵤₜ est déterminée à partir de ces coefficients. Par exemple, la i^{ème} composante du vecteur **x,** *i.e.* xᵢ, permet de déterminer la puissance de sortie Pₒᵤₜ de l'amplificateur 4.i notée Pout[i].

Si la valeur de la composante xᵢ déterminée à l'issue de l'étape d'optimisation E3 est nulle, l'amplificateur correspondant 4.i n'est pas alimenté. Par conséquent, l'élément rayonnant 5.i n'est pas excité de sorte qu'il ne rayonne pas directement. Toutefois, en pratique, cet élément de transmission pourra rayonner de manière indésirée par couplage avec les éléments rayonnants voisins et selon la charge vue par l'antenne (*e.g.* circuit ouvert, circuit fermé, charge de 50 Ω ou autres).

Dans ce cas, on dit que l'antenne active formée par l'amplificateur 4.i et l'élément rayonnant 5.i est éteinte. Dans le cas contraire, on dit que l'antenne est allumée ou non-éteinte.

De manière générale, le calcul d'optimisation lors de l'étape E3 comprend ainsi une étape de détermination E3 d'antennes éteintes et non-éteintes qui consiste à identifier parmi les composantes du vecteur **x** celles qui sont nulles, de manière à désigner les antennes éteintes.

Selon une particularité de l'invention, l'algorithme est adapté à calculer le jeu d'excitations complexes, lors de l'étape E3, en tenant compte des couplages réels entre les antennes du réseau d'antennes actives, par exemple sous la forme d'une condition de couplage C5 appliquée comme contrainte en entrée de l'étape E3. De manière avantageuse, la prise en compte de tels couplages consiste à associer à chaque antenne non éteinte un diagramme de rayonnement qui lui est propre désigné *diagramme de rayonnement environné* (AEP) ci-après. Cette prise en compte a pour effet d'obtenir une loi de pondération en amplitude plus proche de la réalité permettant de réduire encore la consommation énergétique du réseau d'antennes.

Par exemple, le diagramme de rayonnement environné de la n^{ième} antenne excitée dans un réseau linéaire est défini par **l'équation 10** suivante : [Math 10] ${E}_{n}^{a} \left(θ\right) = {E}_{n} {e}^{jn . k . d . sin θ} + {\sum }_{m = 1}^{M} {β}_{m} {S}_{m , n} {E}_{m} {e}^{j . m . k . d . sin θ}$ où k=2π/λ, où λ désigne la longueur d'onde du rayonnement dans le vide ; d désigne l'espacement entre deux antennes consécutives du réseau ; θ désigne la direction de rayonnement considérée ; Eₙ désigne le diagramme de rayonnement environné de la n^{ième} antenne en considérant que toutes les antennes voisines sont adaptées à une impédance de référence (e.g. Z₀); S_{m,n} représente le coefficient de couplage ou de transmission entre l'antenne *n* et l'antenne *m* ; βₘ représente l'énergie effective transmise par l'antenne *m*.

Dans le présent mode de réalisation, l'invention est décrite pour un réseau linéaire. Toutefois, la topologie du réseau n'est pas restrictive, de sorte que le procédé selon l'invention peut être adapté de manière à s'appliquer à des réseaux autres que linéaires, tels que des réseaux linéaires par sections, des réseaux conformés ou des réseaux planaires.

Par exemple, le diagramme de rayonnement environné de la n^{ième} antenne dans la direction θ désigné par ${E}_{n}^{a} \left(θ\right)$ est calculé en considérant que le réseau comprend M+1 antennes parmi lesquelles la n^{ième} antenne excitée est située quasiment au milieu des M antennes voisines non excitées, d'où la présence du facteur de réseau e^{jn.k.d.sin θ} caractéristique d'un réseau linéaire. M est le nombre d'antennes voisines considérées, ce nombre peut être réduit en fonction du niveau de couplage de la n^{ième} antenne avec ses voisines. Dans le cas présent, on considère que M=4, de sorte que les 4 premières antennes voisines de la n^{ième} antenne excitée sont situées de part et d'autre de cette même antenne.

Par exemple, le coefficient S_{m,n} est défini également comme le taux d'énergie transmise de l'antenne *n* vers l'antenne *m*. Cette énergie arrivant sur l'antenne *m* est absorbée par la charge de cette antenne si l'impédance de cette charge est adaptée (i.e. Γ_{c,m} = 0). Dans le cas contraire (i.e. Γ_{c,m} ≠ 0), l'énergie est réfléchie par ladite charge vers l'antenne *m*, qui ainsi excitée, rayonne un champ électrique résultant du couplage entre l'antenne *n* et l'antenne *m*.

Par exemple, la portion de l'énergie βₘ réfléchie par la charge et retransmise par l'antenne *m* est définie par l'**équation 11** suivante :${β}_{m} = {Γ}_{c , m} \left(1-{S}_{m , m}\right) = {Γ}_{c , m} ⋅ \frac{2 {Z}_{0}}{{Z}_{ant , m} + {Z}_{O}}$ avec ${Γ}_{c , m} = \frac{{Z}_{c , m} - {Z}_{o}}{{Z}_{c , m} + {Z}_{o}}$ et ${S}_{m , m} = \frac{{Z}_{ant , m} - {Z}_{o}}{{Z}_{ant , m} + {Z}_{o}}$, où Γ_{c,m} désigne le coefficient de réflexion présenté par la charge Z_{c,m} en entrée de l'antenne *m* ; S_{m,m} désigne le coefficient de réflexion intrinsèque de l'antenne *m* ; Z_{ant,m} désigne l'impédance de l'antenne *m* ; Z₀ désigne l'impédance de référence (e.g. Z₀=50 Ω).

En particulier, l'impédance de charge Z_{c,m} désigne l'impédance de l'amplificateur associé à l'antenne *m*, la valeur de cette impédance étant différente selon que l'amplificateur soit allumé ou éteint. La prise en compte de l'impédance des amplificateurs selon leur état de fonctionnement est particulièrement avantageuse dans le calcul de la loi d'amplitude pour fournir un diagramme de rayonnement fiable et par conséquent une PIRE qui soit la plus exacte possible et ainsi d'optimiser la puissance consommée par le réseau d'antennes actives.

Les paramètres S_{m,m} et S_{m,n} sont des composantes de la matrice [S] qui est, par exemple, extraite au moyen d'un logiciel de simulation électromagnétique 3D. Ces paramètres sont définis classiquement par S_{i,j}=bⱼ/aᵢ tel que, si i=j=m, on parle de coefficient de réflexion intrinsèque S_{m,m} sur le port de l'antenne *m* permettant de déterminer l'impédance Z_{ant,m} de cette antenne ; et si i≠j, on parle de coefficient de couplage entre les antennes i et j.

Selon une particularité de l'invention, l'algorithme est adapté à calculer le jeu d'excitations complexes, lors de l'étape E3, en tenant compte de l'adaptation d'impédance des antennes du réseau d'antennes actives, par exemple sous forme d'une condition d'adaptation d'impédance C6.

De manière générale, le coefficient de réflexion des antennes est influencé par les excitations complexes (en amplitude et en phase) de ses plus proches antennes voisines. Cette influence se traduit à travers le coefficient de réflexion actif sₙ^{a} défini pour la n^{ième} antenne non éteinte, par exemple selon **l'équation 12** suivante :${S}_{n}^{a} = \frac{{S}_{1 , n} {x}_{1}^{{F}_{m}} + … + {S}_{n , n} {x}_{n}^{{F}_{m}} + … + {S}_{N ' , n} {x}_{N '}^{{F}_{m}}}{{x}_{n}^{{F}_{m}}}$ où {x₁^{Fm}, ..., xₙ^{Fm},...,x_{N}^{Fm}} désignent les composantes du vecteur **x**^{Fm} pour le faisceau Fm ; {S_{1,n},...,S_{n,n},...,S_{N',n}} désignent les composantes de la matrice [S] de l'antenne *n* (i.e. coefficients de couplage ou de transmission entre l'antenne *n* et ses N' antennes voisines).

Par exemple, on limitera le nombre d'antennes voisines à prendre en considération à N'=4 comme décrit ci-avant.

Pour tenir compte de l'adaptation d'impédance des antennes en état de fonctionnement, le coefficient de réflexion actif de chaque antenne non éteinte doit rester inférieur à un seuil sₒ. Par exemple, la valeur de ce seuil sₒ peut varier par pallier de -10 dB à -15 dB, de manière à garantir la bonne adaptation d'impédance des antennes utilisées.

Cette condition propre à l'adaptation d'impédance, dite de contrainte d'impédance C6 pour le faisceau Fm peut être exprimée comme suit C₆(**x**^{Fₘ}) : **s**^{a} ≤ sₒ où **s**^{a} est le vecteur d'impédance active tel que ${s}^{a} = \left[{s}_{1}^{a},…{s}_{n}^{a},…,{s}_{N}^{a}\right]$ tel que sₙ^{a} est défini par l'équation 12 ci-dessus.

Dans un mode de réalisation particulier, cette contrainte supplémentaire C₆ est appliquée comme contrainte d'entrée pour le calcul de minimisation de norme du vecteur **x**^{Fm} pour le faisceau Fm lors de l'étape E3, notamment dans le cas où la norme considérée est la norme infinie L_{∞}. Dans ce cas, le problème d'optimisation s'exprime par **l'équation 13** suivante : [Math 13] ${min}_{{x}^{{F}_{m}}} {\left‖{x}^{{F}_{m}}\right‖}_{∞}$ sous les conditions $C \left({x}^{{F}_{m}}\right) = \left\{\begin{matrix}{C}^{{F}_{m}} \left({x}^{{F}_{m}}\right) \\ {C}_{6} \left({x}^{{F}_{m}}\right)\end{matrix}\right.$ avec C₆(**x**^{Fm}): **s**^{a} ≤ sₒ, où ${s}^{a} = \left[{s}_{1}^{a},…{s}_{n}^{a},…,{s}_{N}^{a}\right]$ .

Selon une particularité de l'invention, le problème d'optimisation exprimé par l'équation 13 ci-dessus est rendu convexe en appliquant un processus itératif comme décrit ci-avant en référence à l'équation 2 et en utilisant l'**équation 14** suivante : ${S}_{n}^{a} = \frac{1}{\overline{{x}_{n}^{{F}_{m}}}} {Σ}_{j = 1}^{N '} {S}_{j , n} {x}_{j}^{{F}_{m}}$ où ${\overline{x}}_{n}^{Fm}$ est égale à la moyenne des valeurs ${x}_{n}^{{F}_{m}}$ issues des itérations précédentes.

Par ailleurs, une bonne adaptation des antennes garantit le résultat du calcul des diagrammes de rayonnement environné (1).

Lors d'une étape **E4** de commande d'alimentation, la puissance consommée par les amplificateurs P_{dc} (ou de manière équivalente la tension de polarisation V_{dc}) et la puissance d'entrée Pᵢₙ (ou de manière équivalente la tension d'entrée Vᵢₙ) des amplificateurs des antennes non éteintes sont calculées en fonction de la puissance de sortie Pₒᵤₜ déterminée lors de l'étape précédente E3 en utilisant les fonctions f_{Pdc} et f_{Pin} telles que définies lors de l'étape préalable de caractérisation E0 comme décrit précédemment. Les amplificateurs concernés par cette étape sont ceux pour lesquels les coefficients de pondération en amplitude ne sont pas nuls, *i.e.* correspondant aux antennes non éteintes. A l'issue de l'étape E4, la puissance d'entrée Pᵢₙ et la puissance de polarisation P_{dc} sont appliquées aux amplificateurs respectifs, par exemple, par des moyens tels que décrits précédemment en référence à la **figure 4****.**

Selon un mode de réalisation particulier, la tension de polarisation V_{dc} est sélectionnée pour chaque amplificateur des antennes non éteintes. Par exemple, cette tension de polarisation est déterminée et appliquée par le module de commande d'alimentation des amplificateurs 307, tel que décrit en référence à la **figure 3****,** lors de l'étape E4 de commande d'alimentation des amplificateurs décrite en référence à la **figure 4****.**

Une méthode va maintenant être décrite pour déterminer une valeur optimale de la tension de polarisation V_{dc}, dès lors que le vecteur de pondération **x** a été calculé à l'issue de l'étape E3.

Cette méthode s'applique notamment dans le cas où la tension de polarisation de chaque amplificateur est ajustée dynamiquement, par exemple avec les moyens décrits en référence à la

### figure 4.

Si la composante xₙ correspondant à la pondération en amplitude de l'antenne n est non nulle, le procédé est adapté à calculer la puissance de sortie correspondante Pₒᵤₜ⁽ⁿ⁾ correspondant à xₙ. Dans le cas « multi-faisceaux », la puissance Pₒᵤₜ⁽ⁿ⁾ correspond au cumul de la puissance des signaux des différents opérateurs appliquée sur la *n^{ième}* antenne.

Si cette puissance de sortie Pₒᵤₜ⁽ⁿ⁾ est inférieure ou égale à la puissance maximale de sortie de l'amplificateur P_{n,max} pour fonctionner dans un régime linéaire *(i.e.* Pₒᵤₜ⁽ⁿ⁾ ≤ P_{1dB}) de l'amplificateur, la tension de polarisation V_{dc}⁽ⁿ⁾ est déterminée à partir de la puissance de sortie Pₒᵤₜ⁽ⁿ⁾, selon la fonction P_{dc}⁽ⁿ⁾=f_{Pdc}(Pₒᵤₜ⁽ⁿ⁾). La puissance d'entrée Pᵢₙ⁽ⁿ⁾ est déterminée à partir de la puissance de sortie Pₒᵤₜ⁽ⁿ⁾ selon la fonction Pᵢₙ⁽ⁿ⁾=f_{Pin}(Pₒᵤₜ⁽ⁿ⁾).

Lors d'une étape d'optimisation, la valeur optimale de la tension de polarisation V_{dc}⁽ⁿ⁾ est déterminée pour chaque amplificateur associé à une antenne n non éteinte. Cette valeur optimale est telle qu'elle maximise le rendement énergétique η_{T} du réseau d'amplificateurs et minimise conjointement la puissance totale consommée P_{c} par le réseau d'amplificateurs. A cet effet, le module de commande d'alimentation des amplificateurs 307 est adapté à résoudre le problème d'optimisation exprimé, par exemple, selon **l'équation 15** suivante : ${max}_{{V}_{dc}} \left({η}_{n}\right) et {min}_{{V}_{dc}} \left({P}_{dc}^{\left(n\right)}\right)$ avec ${η}_{T} = \frac{{\sum }_{n = 1}^{N} {P}_{out}^{\left(n\right)}}{{\sum }_{n = 1}^{N} {f}_{{P}_{dc}} \left({P}_{out}^{\left(n\right)}\right) + {f}_{{P}_{in}} \left({P}_{out}^{\left(n\right)}\right)} et {P}_{c} = {\sum }_{n = 1}^{N} {P}_{dc}^{\left(n\right)}$ où,
ηₙ désigne le rendement énergétique du n^{ième} amplificateur ;
P_{dc}⁽ⁿ⁾ désigne la puissance d'alimentation du n^{ième} amplificateur;
η_{T} désigne le rendement énergétique du réseau d'amplificateurs où le numérateur correspond à la puissance totale fournie par le réseau d'amplificateurs et le
dénominateur correspond à la somme des puissances d'entrée Pᵢₙ⁽ⁿ⁾ et des puissances d'alimentation P_{dc}⁽ⁿ⁾ pour chacune des N antennes ; et
P_{c} désigne la puissance totale consommée par le réseau d'amplificateurs.

De manière avantageuse, la tension de polarisation optimale est sélectionnée individuellement pour chaque amplificateur, de manière à le faire fonctionner dans un régime linéaire et de préférence à rendement élevé, *e.g.* au plus proche de son point de compression.

Par exemple, les tensions de polarisation sont sélectionnées parmi l'ensemble de valeurs des échantillons de mesures utilisées pour définir la fonction de polarisation f_{Pdc} lors de l'étape E0.2 décrite en référence à la **figure 5****.**

Ainsi, selon l'invention, la tension de polarisation de chaque amplificateur est sélectionnée de manière optimale ayant pour effet d'ajuster le point de compression et/ou le gain de chaque amplificateur en fonction de la puissance à délivrer de manière à réduire sa puissance consommée P_{dc}⁽ⁿ⁾ et d'augmenter conjointement son rendement énergétique ηₙ.

Cette méthode évite d'alimenter tous les amplificateurs de la même manière auquel cas certains amplificateurs fonctionneraient en régime optimal, *i.e.* présentant une bonne efficacité énergétique, tandis que d'autres amplificateurs fonctionneraient dans régime non optimal sur le plan énergétique, *e.g*. à des puissances très basses par rapport au point de compression.

De manière avantageuse, on constate que le rendement énergétique d'un réseau d'antennes actives à polarisations variables, *i.e.* dans lequel les tensions de polarisation des amplificateurs des antennes non éteintes sont ajustées de manière dynamique et différentiée, est nettement supérieur à celui d'un réseau à polarisation non variable.

Selon un mode de réalisation particulier de l'invention, cette méthode de sélection dynamique de la tension de polarisation (*e.g*. ajustement dynamique du point de fonctionnement) peut être avantageusement combinée à une minimisation de la norme infinie L_{∞} du vecteur de pondération lors de l'étape E3 pour optimiser au maximum l'efficacité énergétique du réseau d'amplificateurs (*i.e.* maximiser le rendement énergétique η_{T} tel que défini ci-avant).

La minimisation de la norme infinie L_{∞} du vecteur de pondération a pour effet d'uniformiser les puissances de pondération des antennes tout en réduisant la dynamique de variation des puissances entre les antennes. Cette opération d'uniformisation permet d'une part de configurer l'ensemble des amplificateurs des antennes non éteintes dans un régime linéaire à rendement énergétique élevé et d'autre part de simplifier la gestion de la polarisation des amplificateurs. Ainsi, un réseau d'antennes actives configuré selon une loi d'amplitude uniformisée offre un meilleur rendement énergétique avec un nombre minimum de tensions de polarisation différentes, ce qui présente l'avantage de concevoir des circuits d'alimentation moins complexes.

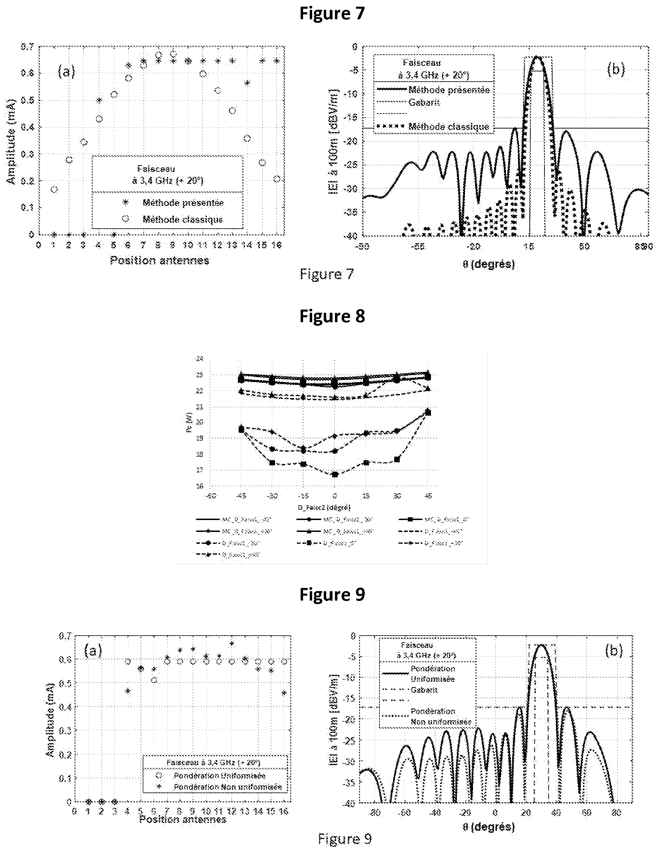

Des résultats obtenus par la mise en œuvre du procédé selon l'invention vont être maintenant décrits en référence aux figures 7, 8, 9 et 10.

Les figures 7a-7b comparent les résultats obtenus par une méthode d'optimisation selon l'invention aux résultats obtenus par une méthode classique où aucune antenne n'est éteinte avec une distribution des amplitudes sous la forme d'une loi binomiale.

La **figure 7a** illustre en ordonnée l'amplitude des courants en mA appliqués à chacune des antennes du réseau (i.e. en entrée des éléments rayonnants) distribuées sur l'axe des abscisses pour un faisceau à une fréquence centrale de 3,4 GHz et orienté à 20°. La méthode selon l'invention permet d'utiliser seulement 12 antennes sur les 16 antennes utilisées selon la méthode classique. Les coefficients de pondération en amplitude obtenus par la méthode selon l'invention ont une amplitude égale à 0 mA pour les antennes distribuées aux positions n°1, 2, 3, 5.

La **figure 7b** illustre le diagramme de rayonnement mesuré en dBV/m à une distance de 100 m par rapport au réseau d'antennes actives pour les lois de pondération illustrées sur la figure 7a. Cette figure permet de vérifier que le diagramme de rayonnement généré par la méthode selon l'invention respecte intégralement le gabarit imposé, malgré des lobes secondaires d'amplitude plus élevée que ceux générés par la méthode classique.

La **figure 8** présente les performances du réseau d'antennes actives en termes de consommation électrique pour les configurations présentées aux figures 7a et 7b et pour différents dépointages. Dans cet exemple, on compare la puissance consommée Pc exprimée en Watts (W) d'un réseau d'amplificateurs identiques référencés BMT352 et alimentés par une tension de polarisation fixe en appliquant une méthode selon l'invention par rapport à la puissance consommée par le même réseau d'amplificateurs mais dont la loi de pondération est déterminée selon la méthode classique. Sur la figure 8, *MC_D_Faisc* désigne les courbes de consommation pour la méthode classique et *D_Faisc* celles obtenues par la méthode selon l'invention pour différentes directions du faisceau (*i.e.* correspondant à des dépointages différents).

Ces résultats montrent que la consommation électrique du réseau d'antennes configuré par le procédé selon l'invention est significativement réduite par rapport à celle obtenue avec la méthode classique. Cette réduction de consommation énergétique est comprise entre 5% et 25% selon les dépointages (i.e. direction du faisceau).

Les **figures 9a-9b et 10a-10b** illustrent les avantages d'une uniformisation des lois de pondération en amplitude pour une méthode d'optimisation selon l'invention. Les jeux de pondération en amplitude représentés sur la figure 9a et les diagrammes de rayonnement représentés sur la figure 9b sont obtenus par l'équation 2 (i.e. sans uniformisation des amplitudes de pondération) et par l'équation 3 (i.e. avec uniformatisation des amplitudes de pondération). Dans les deux cas, on constate que le diagramme de rayonnement respecte le gabarit imposé. Dans le cas où la loi des amplitudes a été uniformisée, les lobes secondaires sont d'amplitudes réduites par rapport au cas où l'uniformisation n'est pas appliquée.

Sur le plan énergétique, les **figures 10a et 10b** illustrant respectivement la puissance consommée P_{c} exprimée en Watts (W) par le réseau d'amplificateurs et le rendement énergétique η de ce réseau exprimé en pourcentage montrent que l'uniformisation des coefficients de pondération en amplitude améliore sensiblement l'efficacité énergétique du réseau d'amplificateurs. Sur les figures 10a et 10b, PNU désigne « pondération non uniforme » et PU désigne « pondération uniforme ».

Dans cet exemple, la polarisation des amplificateurs est fixe (i.e. sans modification). Toutefois, lorsqu'on compare ces deux méthodes (avec et sans uniformisation) avec des tensions de polarisation fixes différentes, la méthode PU sollicite une faible tension de polarisation par rapport à la méthode PNU, par conséquent la puissance totale consommée et le rendement du réseau d'amplificateurs obtenus avec la méthode PU sont bien meilleurs.

De plus, lorsqu'une tension de polarisation variable est appliquée au réseau d'amplificateurs, par exemple comme décrit précédemment en référence à la figure 4, la méthode PU évite d'atteindre des niveaux de tension de polarisation trop bas ou trop hauts, ce qui est favorable au bon fonctionnement des amplificateurs et réduit la complexité des circuits d'alimentation notamment en réduisant le nombre de sources de tension requises.

Selon les résultats de la figure 10b, un rendement élevé est atteint lorsqu'au moins l'un des faisceaux ne dépointe pas (direction principale à 0°) car plusieurs antennes actives sont éteintes. Ainsi, les antennes allumées émettent à un niveau plus fort et les puissances fournies par les amplificateurs associés correspondent à leurs zones de rendement optimal.

Dans les modes de réalisation décrits ci-dessus, la prise en compte de la puissance maximale admissible P_{i,max} des amplificateurs pour déterminer les excitations complexes permet de limiter le nombre d'antennes à éteindre en respectant la puissance d'émission tout en garantissant un fonctionnement des amplificateurs en régime linéaire.

Concernant l'influence de la caractéristique de puissance maximale admissible des amplificateurs Pₘₐₓ (en supposant que cette puissance est la même pour tous les amplificateurs) sur le nombre d'antennes à éteindre, les inventeurs ont validé expérimentalement que pour une valeur de PIRE donnée, plus la valeur de Pₘₐₓ est petite, plus le nombre d'antennes éteintes diminue.

Concernant l'influence de la PIRE sur le nombre d'antennes éteintes pour une valeur de Pₘₐₓ donnée, les inventeurs ont validé expérimentalement que plus la valeur de la PIRE augmente, plus le nombre d'antennes éteintes diminue.

Un mode préféré de réalisation de l'invention va être maintenant décrit en référence à la **figure 11****.**

Initialement, on suppose que l'algorithme mis en œuvre par ce mode préféré dispose d'un ensemble de variables d'entrée caractéristiques du réseau d'antennes à configurer. Par exemple, cet ensemble comprend : le diagramme de rayonnement environné des antennes actives (AEP) incluant notamment les paramètres βₘ, S_{m,n} tels que définis ci-avant ; par exemple, le gabarit de rayonnement du réseau d'antennes actives (G) ; la matrice [S] de chaque antenne active (*i.e.* élément rayonnant associé à un amplificateur) ; le nombre maximum d'antennes à éteindre ; pour chaque tension de polarisation v_{dc}^{k} : fonction de puissance de consommation (f_{Pdc}^{k}), fonction de puissance d'entrée (f_{Pin}^{k}), et puissance du point de compression à 1dB (P_{1dB}^{k}).

Les fonctions ${f}_{Pdc}^{k}$ et ${f}_{Pin}^{k}$, telles que k = 1...K avec K désignant le nombre maximal de tension de polarisation ${v}_{dc}^{k}$ possible, caractérisent respectivement la puissance consommée par un amplificateur P_{dc} et la puissance nécessaire en entrée Pᵢₙ en fonction de sa puissance de sortie. Pour chaque tension de polarisation ${v}_{dc}^{k}$ applicable à un amplificateur, on lui associe les fonctions ${f}_{Pdc}^{k}$ et ${f}_{Pin}^{k}$ puis son point de compression ${P}_{1 dB}^{k}$. Les fonctions sont déterminées par application de la méthode de spline cubique sur les échantillons de mesures (Pᵢₙ , I_{c}) en fonction de Pₒᵤₜ et V_{dc}, les points de compression ${P}_{1 dB}^{k}$ sont définies de façon expérimentale.

Ces variables (ou paramètres) d'entrée listés ci-dessus sont les mêmes que ceux déjà décrits précédemment. Par souci de concision, on se reportera directement aux passages concernés pour éviter d'avoir à les reporter ici.

### Etape E3.1

Lors d'une étape E3.1, l'algorithme détermine une ou plusieurs antennes à éteindre en utilisant tout ou partie dudit ensemble de variables d'entrée. Pour cela, l'algorithme exécute la résolution du problème d'optimisation convexe consistant à minimiser la norme convexe L₁ ou la norme mixte L_{1,2} en imposant des contraintes de rayonnement C1, C2, C3 selon un gabarit et une contrainte de puissance maximale C4 admissible par les amplificateurs.

Par exemple, la puissance maximale admissible par les amplificateurs correspond au point de compression ${P}_{1 dB}^{k}$ le plus élevé, donc celle obtenue avec la plus forte tension de polarisation. De préférence, la norme L₁ est appliquée pour l'émission d'un seul faisceau tandis que la norme mixte L_{1,2} est appliquée par l'algorithme pour l'émission de plusieurs faisceaux simultanés. Par un processus itératif mis en œuvre au sein de l'étape E3.1, un certain nombre d'antennes à éteindre sont déterminées, *i.e.* celles qui sont en dessous d'un certain seuil qui est par exemple égal à x/100.

Par ailleurs, toutes les antennes peuvent rester allumées selon les contraintes de rayonnement C1, C2, C3 appliquées à l'algorithme. En effet, des contraintes trop fortes peuvent rendre le problème insoluble. Ainsi, si le nombre d'antennes à éteindre est nul (test T1), l'algorithme est adapté à interrompre l'étape E3.1 pour modifier le gabarit G (SLL, HPBW, *etc*) lors de l'étape E310 avant de réitérer l'étape E3.1.

Des programmes d'ajustement sont prévus pour toutes les parties de l'algorithme permettant de déduire les antennes à éteindre mais aussi de limiter le nombre d'antennes à éteindre si nécessaire.

### Etape E312

Dès lors que des antennes à éteindre ont été sélectionnées à l'issue de l'étape E3.1, une étape de calcul E312 est prévue pour redéfinir des diagrammes de rayonnement environnés des antennes à allumer tout en tenant compte des modifications apportées par les amplificateurs éteints (*i.e.* modification des diagrammes environnés des antennes allumées voisines). En effet, l'extinction de certaines antennes a pour effet de modifier le couplage et/ou l'adaptation d'impédance des antennes destinées à rester allumées à l'issue de l'étape E3.1.

### Etape E3.2

Lors d'une étape E3.2, l'algorithme détermine séparément pour chaque faisceau Fm, les jeux d'excitations complexes, *i.e.* jeux de pondérations en amplitude et en phase, par une méthode d'optimisation convexe consistant à minimiser la norme infinie du vecteur **x**^{Fm} en imposant des contraintes de rayonnement selon un gabarit C1, C2, C3 et une contrainte de puissance maximale admissible par les amplificateurs C4.

L'étape E3.2 permet avantageusement de réduire la dynamique de variation des amplitudes d'excitation afin d'améliorer l'efficacité énergétique du réseau d'amplificateurs tout en garantissant les contraintes de rayonnement.

Pour cela, l'algorithme est adapté à appliquer la norme infinie et à rechercher une solution au problème d'optimisation que se déroule en deux phases.

Lors d'une première phase de calcul, l'algorithme recherche une solution au problème d'optimisation défini par **l'équation 16** suivante : ${min}_{{x}^{{F}_{m}}} {\left‖{x}^{{F}_{m}}\right‖}_{∞} sous les conditions C \left({x}^{{F}_{m}}\right) = \left\{{C}^{{F}_{m}}\left({x}^{{F}_{m}}\right)\right\} .$

Les solutions de ce problème d'optimisation sont utilisées comme valeurs de départ ${x}_{n}^{{F}_{m}}$ pour une deuxième phase de calcul qui consiste à résoudre le problème d'optimisation décrit par l'équation 13 ci-dessus.

A l'issue de la première phase de calcul, l'algorithme est adapté pour calculer le vecteur d'impédance active **s**^{a} et à comparer les composantes ${s}_{n}^{a}$ de ce vecteur (i.e. coefficients de réflexion actifs) à un seuil de référence prédéfini sₒ (par exemple, sₒ=-10 dB). S'il existe une antenne *n* dont le coefficient de réflexion actif ${s}_{n}^{a}$ dépasse ce seuil, l'algorithme passe à la deuxième phase de calcul. Dans le cas contraire, l'algorithme saute cette phase et conserve le résultat obtenu.

Lors de la première phase de calcul, si l'algorithme ne trouve aucune solution à **l'équation 16,** cela montre qu'il y a moins d'antennes allumées qu'il n'en faut pour résoudre ce problème. Dans ce cas, le procédé est réinitialisé, lors d'une étape E310, en fixant la limite d'antennes éteintes *(i.e.* valeur du paramètre *Limite_Ant_off)* en dessous du nombre d'antennes éteintes obtenu précédemment.

Par ailleurs, une bonne adaptation des antennes garantit le résultat du calcul des diagrammes de rayonnement environnés en utilisant l'expression selon l'**équation 10** ci-avant.

De manière générale, l'ensemble des étapes (ou sous-étapes) E3.1, E312, E3.2 font partie d'une étape de détermination des antennes éteintes et non éteintes E3', à l'issue de laquelle est fourni le jeu de pondération en amplitudes et en phases. Des variantes de ces sous-étapes pourront être considérées dans le cadre de la présente invention.

### Etape E4'

Lors d'une étape E4', l'algorithme est adapté à sélectionner les tensions de polarisation des amplificateurs des antennes non éteintes. Cette étape consiste à choisir pour chaque amplificateur la tension de polarisation ${v}_{dc}^{k}$ offrant la meilleure efficacité énergétique, c'est-à-dire une faible consommation ${P}_{c}^{k}$ et un fort rendement ${η}_{c}^{k}$.

Pour effectuer ce choix, l'algorithme est adapté à calculer d'abord la puissance totale que doit fournir cet amplificateur, en sommant la puissance nécessaire pour chaque faisceau. Ensuite, l'algorithme est adapté à comparer cette puissance au niveau de puissance des différents points de compression ${P}_{1 dB}^{k}$. L'algorithme est adapté à présélectionner les tensions de polarisation ${v}_{dc}^{k}$ dont la puissance du point de compression ${P}_{1 dB}^{k}$ correspondant de l'amplificateur est supérieure à ${P}_{out}^{n}$. Ensuite, l'algorithme calcule les couples puissance-rendement ( ${P}_{c}^{k} , {η}_{c}^{k}$) pour les différentes tensions de polarisation ${v}_{dc}^{k}$ présélectionnées. Enfin, l'algorithme choisit la tension de polarisation qui offre la puissance consommée ${P}_{c}^{k}$ la plus faible et le rendement ${η}_{c}^{k}$ le plus élevé.

A l'issue de ces étapes, l'algorithme fournit en sortie les jeux de pondérations d'amplitude et de phase des différents faisceaux et le choix des tensions de polarisation des amplificateurs pour les antennes non éteintes.

L'invention ne se limite pas aux seuls modes de réalisation décrits ci-dessus. En particulier, les caractéristiques des différents modes de réalisation du procédé de configuration de réseaux d'antennes actives peuvent être combinées, les réseaux d'antennes d'actives peuvent être configurés selon l'un quelconque des modes de réalisation du procédé de configuration selon l'invention.

Les réalisations qui précèdent sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Le réseau d'antennes actives configuré selon l'un quelconque des modes de réalisation pourra être intégré dans n'importe quel autre dispositif de communication destiné à émettre et/ou à recevoir des données selon un ou plusieurs faisceaux.

## Revendications

1. Procédé de configuration d'un réseau (308) d'antennes actives adapté à émettre au moins un faisceau (F1, F2 ; F1, F2, F3 ; F1,...,FM) selon un diagramme de rayonnement (D) souhaité et dans lequel chacune desdites antennes comprend au moins un élément rayonnant (5.1,...,5.n) et un amplificateur (4.1,...,4.n) adapté à exciter ledit élément rayonnant (5.1,...,5.n), ledit procédé comprenant une étape de détermination (E3) d'antennes éteintes et non-éteintes, ladite étape de détermination étant **caractérisée en ce qu'**elle comprend une étape d'exploitation de caractéristiques (P_{i,max}) des amplificateurs relatives à leurs consommations énergétiques, les caractéristiques des amplificateurs (P_{i,max}) étant des puissances de compression, par exemple à -1 dB, des amplificateurs, ladite étape d'exploitation utilisant un jeu de conditions (Cx(θ)) comprenant une condition de puissance (C4) portant sur la puissance en sortie de chaque amplificateur et utilisant lesdites caractéristiques des amplificateurs (P_{i,max}), la condition de puissance (C4) étant que la puissance de sortie de chaque amplificateur (Pⁱₒᵤₜ) doit rester inférieure ou égale à la puissance de compression, de sorte que pour les antennes non éteintes, chacun des amplificateurs fonctionne dans un régime linéaire.

2. Procédé selon la revendication 1, dans lequel le jeu de conditions comprend en outre au moins une des conditions suivantes :
- des conditions relatives (C1, C2, C3) à un gabarit (G) élaboré (E1) selon le diagramme de rayonnement souhaité (D), ces conditions dites de rayonnement (C1, C2, C3) étant définies en fonction d'une puissance isotrope rayonnée équivalente (PIRE) déterminée à partir du diagramme de rayonnement souhaité (D) ; et/ou
- une contrainte de couplage (C5), selon laquelle chaque antenne dudit réseau d'antennes actives est couplée à au moins une antenne voisine ; et/ou
- une contrainte d'impédance (C6) selon laquelle chaque antenne dudit réseau d'antennes actives est adaptée selon une impédance de référence.

3. Procédé selon la revendication 2, **caractérisé en ce que** ladite contrainte d'impédance (C6) est telle que les composantes (sₙ^{a}) d'un vecteur d'impédance active (s^{a}) du réseau d'antenne actives sont inférieures ou égales à un seuil prédéterminé (sₒ).

4. Procédé selon l'une quelconque des revendications 1 à 3, caractérisé en que ladite étape de détermination (E3) comprend un calcul d'un jeu d'excitations complexes des antennes par exécution par un processeur (3.1) d'un algorithme d'optimisation appliquant ledit jeu de conditions (C1, C2, C3, C4 ; C1, C2, C3, C4, C5; C1, C2, C3, C4, C6 ; C1, C2, C3, C4, C5, C6).

5. Procédé selon la revendication 4 prise ensemble avec l'une des revendications 2 et 3, **caractérisé en ce que** le jeu d'excitations complexes est déterminé (E3) en appliquant à l'algorithme d'optimisation un diagramme de rayonnement environné (AEP) défini pour chaque antenne, ledit diagramme tenant compte d'un couplage entre ladite chaque antenne et un nombre prédéterminé d'antennes voisines de ladite chaque antenne.

6. Procédé selon l'une quelconque des revendications 4 à 5, **caractérisé en ce que** le jeu d'excitations complexes est obtenu par minimisation (E3) d'une norme convexe, notamment de type L₁, d'un vecteur de pondération représentatif desdites excitations complexes (x) sous le jeu de conditions.

7. Procédé selon l'une quelconque des revendications 4 à 5, **caractérisé en ce que**, pour au moins deux faisceaux (F1, F2) simultanés, le jeu d'excitations complexes est obtenu par une méthode de parcimonie groupée comprenant une minimisation (E3) d'une norme mixte, notamment de type L_{1,2}, d'un vecteur de pondération groupée (**x_{G}**) dont chacune des composantes est la somme du carré des excitations complexes desdits au moins deux faisceaux pour chaque antenne dudit réseau (308) d'antennes actives.

8. Procédé selon l'une quelconque des revendications 4 à 7, **caractérisé en ce qu'**il comprend en outre une étape d'uniformisation des amplitudes du jeu d'excitations complexes, de manière à fournir une loi de pondération en amplitude uniforme, ladite étape d'uniformisation comprenant un calcul de minimisation (E3) d'une norme infinie, notamment de type L_{∞}, d'un vecteur de pondération représentatif desdites excitations complexes (**x**).

9. Procédé selon l'une quelconque des revendications 6 à 8, **caractérisé en ce que** le jeu d'excitations complexes est calculé (E3) de manière itérative, dans lequel ladite norme est pondérée, de sorte qu'un coefficient de pondération ${α}_{n}^{k}$ est affecté à chaque composante ${x}_{n}^{k}$ du vecteur de pondération (**x** ; **x_{G}**).

10. Procédé selon l'une quelconque des revendications 4 à 9, **caractérisé en ce qu'**il comprend en outre une étape de commande d'alimentation (E4 ; E4') des amplificateurs, lors de laquelle une puissance ou tension de polarisation est appliquée à chaque amplificateur d'une antenne non éteinte, ladite puissance ou tension de polarisation étant sélectionnée en fonction d'une puissance de sortie de l'amplificateur correspondant à l'amplitude de l'excitation complexe déterminée lors de l'étape de détermination des antennes éteinte et non-éteintes (E3), ladite puissance ou tension de polarisation étant sélectionnée de manière à minimiser la puissance consommée par ledit amplificateur et maximiser le rendement dudit amplificateur.

11. Procédé selon la revendication 10, **caractérisé en ce qu'**il comprend :
- une première étape préalable (E0.1) de caractérisation des amplificateurs, lors de laquelle chaque amplificateur est **caractérisé par** une fonction de puissance de consommation (f_{Pdc}) permettant de sélectionner une tension de polarisation (V_{dc}) de chaque amplificateur en fonction de ladite puissance en sortie (Pₒᵤₜ) dudit chaque amplificateur ; et/ou
- une deuxième étape (E0.2) préalable de caractérisation des amplificateurs, lors de laquelle chaque amplificateur est **caractérisé par** une fonction de puissance d'entrée (f_{Pin}) permettant de déterminer une puissance d'entrée (Pᵢₙ) en fonction de la puissance en sortie (Pₒᵤₜ) de l'amplificateur.

12. Procédé selon l'une quelconque des revendications 6 à 11, **caractérisé en ce que** ladite minimisation de la norme convexe (L₁) ou de la norme mixte (L_{1,2}) est calculée (E3) par une méthode d'optimisation convexe.

13. Réseau (308) d'antennes actives parcimonieux adapté à transmettre au moins un faisceau (F1, F2, F3) selon un diagramme de rayonnement souhaité, chacune desdites antennes actives comprenant au moins un élément rayonnant (5.1,...,5.n,...,5.N) et un amplificateur (4.1,...,4.n,...,4.N) adapté à exciter ledit élément rayonnant, ledit réseau étant **caractérisé en ce qu'**il est configuré par le procédé de configuration selon l'une quelconque des revendications 1 à 12.

14. Dispositif de communication adapté à émettre selon au moins un faisceau d'ondes radiofréquences, ledit dispositif étant **caractérisé en ce qu'**il comprend un réseau (308) d'antennes actives selon la revendication 13, ledit dispositif étant sélectionné parmi un terminal mobile ou une station de base.

## Patentansprüche

1. Verfahren zur Konfiguration eines Netzwerks (308) aktiver Antennen, das dazu ausgelegt ist, mindestens einen Strahl (F1, F2; F1, F2, F3; F1, ..., FM) gemäß einem gewünschten Strahlungsdiagramm (D) zu emittieren, und wobei jede der Antennen mindestens ein Strahlungselement (5.1, ..., 5.n) und einen Verstärker (4.1, ..., 4.n) umfasst, der dazu ausgelegt ist, das Strahlungselement (5.1, ..., 5.n) anzuregen, wobei das Verfahren einen Bestimmungsschritt (E3) von ausgeschalteten und nicht ausgeschalteten Antennen umfasst, wobei der Bestimmungsschritt **dadurch gekennzeichnet ist, dass** er einen Anwendungsschritt von Kennwerten (P_{i,max}) der Verstärker in Bezug auf deren Energieverbrauche umfasst, wobei die Kennwerte der Verstärker (P_{i,max}) Kompressionsleistungen, zum Beispiel bei -1 dB, der Verstärker sind, wobei der Auswertungsschritt einen Satz Bedingungen (Cx(θ)) nutzt, der eine Leistungsbedingung (C4) bezüglich der Ausgangsleistung jedes Verstärkers umfasst und die Kennwerte der Verstärker (P_{i,max}) nutzt, wobei die Leistungsbedingung (C4) besagt, dass die Ausgangsleistung jedes Verstärkers (Pⁱₒᵤₜ) kleiner oder gleich der Kompressionsleistung bleiben muss, sodass bei den nicht abgeschalteten Antennen jeder der Verstärker in einem linearen Betrieb arbeitet.

2. Verfahren nach Anspruch 1, wobei der Satz Bedingungen weiter mindestens eine der folgenden Bedingungen umfasst:
- Bedingungen (C1, C2, C3) bezüglich einer Schablone (G), die gemäß dem gewünschten Strahlungsdiagramm (D) erstellt (E1) wurde, wobei diese sogenannten Strahlungsbedingungen (C1, C2, C3) in Abhängigkeit von einer äquivalenten isotropen Strahlungsleistung (PIRE) definiert sind, die auf Grundlage des gewünschten Strahlungsdiagramms (D) bestimmt wird; und/oder
- eine Kopplungs-Nebenbedingung (C5), wonach jede Antenne des Netzwerks aktiver Antennen mit mindestens einer Nachbarantenne gekoppelt ist; und/oder
- eine Impedanz-Nebenbedingung (C6), wonach jede Antenne des Netzwerks aktiver Antennen gemäß einer Referenzimpedanz ausgelegt ist.

3. Verfahren nach Anspruch 2, **dadurch gekennzeichnet, dass** die Impedanz-Nebenbedingung (C6) derart beschaffen ist, dass die Komponenten (sₙ^{a}) eines Aktivimpedanzvektors (s^{a}) des Netzwerks aktiver Antennen kleiner oder gleich einer vorbestimmten Schwelle (sₒ) sind.

4. Verfahren nach einem der Ansprüche 1 bis 3, **dadurch gekennzeichnet, dass** der Bestimmungsschritt (E3) eine Berechnung eines Satzes komplexer Anregungen der Antennen durch Ausführung eines Optimierungsalgorithmus, welcher den Satz Bedingungen (C1, C2, C3, C4; C1, C2, C3, C4, C5; C1, C2, C3, C4, C6; C1, C2, C3, C4, C5, C6) anwendet, durch einen Prozessor (3.1) umfasst.

5. Verfahren nach Anspruch 4 in Kombination mit einem der Ansprüche 2 und 3, **dadurch gekennzeichnet, dass** der Satz komplexer Anregungen unter Anwendung eines für jede Antenne definierten Umgebungsstrahlungsdiagramms (AEP) auf den Optimierungsalgorithmus bestimmt (E3) wird, wobei das Diagramm eine Kopplung zwischen jeder Antenne und einer vorbestimmten Anzahl von Nachbarantennen jeder Antenne berücksichtigt.

6. Verfahren nach einem der Ansprüche 4 bis 5, **dadurch gekennzeichnet, dass** der Satz komplexer Anregungen durch Minimierung (E3) einer konvexen Norm, insbesondere vom Typ L₁, eines für die komplexen Anregungen (x) repräsentativen Gewichtungsvektors unter dem Satz Bedingungen erhalten wird.

7. Verfahren nach einem der Ansprüche 4 bis 5, **dadurch gekennzeichnet, dass** für mindestens zwei gleichzeitige Strahlen (F1, F2) der Satz komplexer Anregungen durch eine Methode der Gruppensparsamkeit erhalten wird, die eine Minimierung (E3) einer gemischten Norm, insbesondere vom Typ L_{1,2}, eines Gruppengewichtungsvektors (**x**_{G}) umfasst, von dem jede der Komponenten die Summe des Quadrats der komplexen Anregungen der mindestens zwei Strahlen für jede Antenne des Netzwerks (308) aktiver Antennen ist.

8. Verfahren nach einem der Ansprüche 4 bis 7, **dadurch gekennzeichnet, dass** es weiter einen Vereinheitlichungsschritt der Amplituden des Satzes komplexer Anregungen umfasst, um ein Gesetz der einheitlichen Amplitudengewichtung bereitzustellen, wobei der Vereinheitlichungsschritt eine Minimierungsberechnung (E3) einer unendlichen Norm, insbesondere vom Typ L_{∞}, eines für die komplexen Anregungen (**x**) repräsentativen Gewichtungsvektors umfasst.

9. Verfahren nach einem der Ansprüche 6 bis 8, **dadurch gekennzeichnet, dass** der Satz komplexer Anregungen iterativ berechnet (E3) wird, wobei die Norm gewichtet wird, sodass jeder Komponente ${x}_{n}^{k}$ des Gewichtungsvektors (**x**; **x**_{G}) ein Gewichtungskoeffizient ${α}_{n}^{k}$ zugewiesen wird.

10. Verfahren nach einem der Ansprüche 4 bis 9, **dadurch gekennzeichnet, dass** es weiter einen Versorgungssteuerungsschritt (E4; E4') der Verstärker umfasst, bei dem an jeden Verstärker einer nicht abgeschalteten Antenne eine Vorspannungsleistung oder -spannung angelegt wird, wobei die Vorspannungsleistung oder -spannung in Abhängigkeit von einer Ausgangsleistung des Verstärkers ausgewählt wird, die der Amplitude der komplexen Anregung entspricht, welche im Bestimmungsschritt der abgeschalteten und nicht abgeschalteten Antennen (E3) bestimmt wurde, wobei die Vorspannungsleistung oder -spannung so ausgewählt wird, dass die von dem Verstärker aufgenommene Leistung minimiert und der Wirkungsgrad des Verstärkers maximiert wird.

11. Verfahren nach Anspruch 10, **dadurch gekennzeichnet, dass** es umfasst:
- einen ersten vorbereitenden Schritt (E0.1) zur Charakterisierung der Verstärker, bei dem jeder Verstärker mittels einer Leistungsaufnahmefunktion (f_{Pdc}) charakterisiert wird, die es ermöglicht, eine Vorspannungsspannung (V_{dc}) jedes Verstärkers in Abhängigkeit von der Ausgangsleistung (Pₒᵤₜ) des jeweiligen Verstärkers auszuwählen; und/oder
- einen zweiten vorbereitenden Schritt (E0.2) zur Charakterisierung der Verstärker, bei dem jeder Verstärker mittels einer Eingangsleistungsfunktion (f_{Pin}) charakterisiert wird, die es ermöglicht, eine Eingangsleistung (Pᵢₙ) in Abhängigkeit von der Ausgangsleistung (Pₒᵤₜ) des Verstärkers zu bestimmen.

12. Verfahren nach einem der Ansprüche 6 bis 11, **dadurch gekennzeichnet, dass** die Minimierung der konvexen Norm (L₁) oder der gemischten Norm (L_{1,2}) mittels einer Methode der konvexen Optimierung berechnet (E3) wird.

13. Sparsames Netzwerk (308) aktiver Antennen, das dazu ausgelegt ist, mindestens einen Strahl (F1, F2, F3) gemäß einem gewünschten Strahlungsdiagramm zu senden, wobei jede der aktiven Antennen mindestens ein Strahlungselement (5.1, ..., 5.n, ..., 5.N) und einen Verstärker (4.1, ..., 4.n, ..., 4.N) umfasst, der dazu ausgelegt ist, das Strahlungselement anzuregen, wobei das Netzwerk **dadurch gekennzeichnet ist, dass** es nach dem Konfigurationsverfahren nach einem der Ansprüche 1 bis 12 konfiguriert ist.

14. Kommunikationsvorrichtung, die dazu ausgelegt ist, gemäß mindestens einem Hochfrequenzwellenstrahl zu emittieren, wobei die Vorrichtung **dadurch gekennzeichnet ist, dass** sie ein Netzwerk (308) aktiver Antennen nach Anspruch 13 umfasst, wobei die Vorrichtung aus einem mobilen Endgerät oder einer Basisstation ausgewählt ist.

## Claims

1. A method for configuring a network (308) of active antennas adapted to transmit at least one beam (F1, F2; F1, F2, F3; F1, ..., FM) according to a desired radiation pattern (D), and wherein each of said antennas comprises at least one radiating element (5.1, ..., 5.n) and an amplifier (4.1, ..., 4.n) adapted to excite said radiating element (5.1, ...,5.n), said method comprising a determination step (E3) of determining antennas turned off antennas and turned on antennas, said determination step being **characterized in that** it comprises an exploitation step of exploiting characteristics (P_{i,max}) of the amplifiers relating to their power consumption, the characteristics (P_{i,max}) of the amplifiers being compression powers, for example at -1 dB, of the amplifiers, said exploitation step using a set of conditions (Cx(θ)) comprising a power condition (C4) relating to the output power of each amplifier and using said characteristics (P_{i,max}) of the amplifiers, the power condition (C4) being that the output power of each amplifier (Pⁱₒᵤₜ) must remain less than or equal to the compression power, so that for turned on antennas, each of the amplifiers operates in a linear mode.

2. The method according to claim 1, wherein the set of conditions further comprises at least one of the following conditions:
- conditions (C1, C2, C3) relating to a template (G) generated (E1) based on the desired radiation pattern (D), these so-called radiation conditions (C1, C2, C3) being defined in terms of an equivalent isotropic radiated power (EIRP) determined from the desired radiation pattern (D); and/or
- a coupling constraint (C5), according to which each antenna of said active antenna network is coupled to at least one neighboring antenna; and/or
- an impedance constraint (C6), according to which each antenna of said active antenna network is matched to a reference impedance.

3. The method according to claim 2, **characterized in that** said impedance constraint (C6) is such that the components (sₙ^{a}) of an active impedance vector (s^{a}) of the active antenna network are less than or equal to a predetermined threshold (sₒ).

4. The method according to any one of claims 1 to 3, **characterized in that** said determination step (E3) comprises calculating a set of complex excitations of the antennas by having a processor (3.1) execute an optimization algorithm that applies said set of conditions (C1, C2, C3, C4; C1, C2, C3, C4, C5; C1, C2, C3, C4, C6; C1, C2, C3, C4, C5, C6).

5. The method according to claim 4 taken together with one of claims 2 and 3, **characterized in that** the set of complex excitations is determined (E3) by applying to the optimization algorithm an ambient radiation pattern (AEP) defined for each antenna, said pattern taking into account coupling between each said antenna and a predetermined number of neighboring antennas of each said antenna.

6. The method according to any one of claims 4 to 5, **characterized in that** the set of complex excitations is obtained by minimizing (E3) a convex norm, in particular of the L₁ type, of a weighting vector representative of said complex excitations (x) under the set of conditions.

7. The method according to any one of claims 4 to 5, **characterized in that**, for at least two simultaneous beams (F1, F2), the set of complex excitations is obtained by a grouped parsimony method comprising a minimization (E3) of a mixed norm, in particular of L_{1,2} type, of a grouped weighting vector (**x_{G}**) whose components are each the sum of the squares of the complex excitations of said at least two beams for each antenna of said network (308) of active antennas.

8. The method according to any one of claims 4 to 7, **characterized in that** it further comprises a step of uniformizing the amplitudes of the set of complex excitations, so as to provide a uniform amplitude weighting function, said uniformization step comprising a minimization calculation (E3) of an infinite norm, in particular of the L_{∞} type, of a weighting vector representative of said complex excitations (**x**).

9. The method according to any one of claims 6 to 8, **characterized in that** the set of complex excitations is calculated (E3) iteratively, wherein said norm is weighted, such that a weighting coefficient ${α}_{n}^{k}$ is assigned to each component ${x}_{n}^{k}$ of the weighting vector (**x; x_{G}**).

10. The method according to any one of claims 4 to 9, **characterized in that** it further comprises a power supply control step (E4; E4') for controlling the power supply of amplifiers, during which a bias power or voltage is applied to each amplifier of a turned on antenna, said bias power or voltage being selected as a function of an output power of the amplifier corresponding to the amplitude of the complex excitation determined during the step of determining the turned off antennas and turned on antennas (E3), said bias power or voltage being selected so as to minimize the power consumed by said amplifier and maximize the efficiency of said amplifier.

11. The method according to claim 10, **characterized in that** it comprises:
- a first preliminary step (E0.1) of characterizing the amplifiers, during which each amplifier is **characterized by** a power consumption function (f_{Pdc}) that allows a bias voltage (V_{dc}) for each amplifier to be selected as a function of said output power (Pₒᵤₜ) of said each amplifier; and/or
- a second preliminary step (E0.2) for characterizing the amplifiers, during which each amplifier is **characterized by** an input power function (f_{Pin}) that enables to determine an input power (Pᵢₙ) as a function of the output power (Pₒᵤₜ) of the amplifier.

12. The method according to any one of claims 6 to 11, **characterized in that** said minimization of the convex norm (L₁) or the mixed norm (L_{1,2}) is calculated (E3) using a convex optimization method.

13. A parsimonious active antenna network (308) adapted to transmit at least one beam (F1, F2, F3) according to a desired radiation pattern, each of said active antennas comprising at least one radiating element (5.1, ..., 5.n, ...,5.N) and an amplifier (4.1, ..., 4.n, ..., 4.N) adapted to excite said radiating element, said network being **characterized in that** it is configured by the configuration method according to any one of claims 1 to 12.

14. A communication device adapted to transmit using at least one radio frequency beam, said device being **characterized in that** it comprises a network (308) of active antennas according to claim 13, said device being selected from a mobile terminal or a base station.
